# EUROPEAN PATENT SPECIFICATION

(11) **EP 3 526 143 B1**
(45) Date of publication and mention of the grant of the patent: **20.05.2026**
(21) Application number: 17862240.3
(22) Date of filing: 18.10.2017
(51) Int. Cl.: B65F 1/16, A23K 10/26, A23K 10/37, B65D 43/16, B65D 51/18, B65F 3/00, B09B 5/00, A23K 50/75, A23N 17/00, B09B 3/00, B65F 1/02, B65F 1/12, B65F 1/14, B65F 7/00, B65F 3/02, A23K 40/10, A23K 40/25

(54) **METHOD FOR FOOD WASTE RECYCLING**
VERFAHREN ZUR WIEDERVERWERTUNG VON LEBENSMITTELABFALL
PROCÉDÉ DE RECYCLAGE DE DÉCHETS ALIMENTAIRES

(30) Priority: 18.10.2016 AU 2016904222; 09.01.2017 AU 2017900033; 30.06.2017 AU 2017902559
(43) Date of publication of application: 21.08.2019
(73) Proprietor: Boyle, Norman, Merimbula, New South Wales 2548 (AU)
(72) Inventor: Boyle, Norman, Merimbula, New South Wales 2548 (AU)
(74) Representative: Cameron Intellectual Property Ltd
(86) International application number: PCT/AU2017/051130
(87) International publication number: WO 2018/071971

(56) References cited:
- AU-B2- 535 190
- AU-B2- 535 190
- KR-B1- 101 516 737
- US-A- 4 150 795
- US-A- 4 182 530
- US-A- 4 182 530
- US-A- 4 319 762
- US-A- 4 456 141
- US-A1- 2002 122 850
- US-A1- 2011 042 377
- US-A1- 2015 041 468
- US-A1- 2015 041 468

## Description

### Technical Field

The present disclosure relates generally to food waste recycling and, in a particular form, to apparatus, methods and systems which can enable the beneficial recycling of food waste generated by establishments that produce such waste.

### Background Art

Enormous quantities of food is disposed of on a daily basis, and especially so in establishments such as supermarkets, bakeries, butchers, cafes and restaurants. Disposal of this food waste is becoming more problematic as it is generally no longer acceptable to send all food waste to landfill.

Some local government initiatives to decrease the amount of food waste finding its way to landfill include the promotion of worm farms or composting bins. Whilst attractive at a household level, however, the effort required to operate worm farms and/or composting bins would often be unattractive to larger establishments. Furthermore, the volume of food waste produced by such establishments may make these solutions unfeasible.

Collection services are available in some locations, where segregated food waste (e.g. segregated coffee grounds, food scraps or meat off-cuts) is collected and transferred to processing facilities that produce electricity or vendible products. For example, meat off-cuts can be collected from butchers, and rendered in order to separate the liquid fat from the solid meat and bone. This process produces meat and bone meal, which is useful for stock feed for intensive livestock production, pet food or fertiliser, as well as tallow, which is useful for soap manufacturing.

Unfortunately, however, many food waste-producing establishments do not take advantage of such services, and large proportions of food waste still end up in landfill. Encouraging a reduction in the amount of waste food sent to landfill may be advantageous for both environmental and commercial reasons.

AU 535190 B2 discloses a waste container lid.

US 4182530 A discloses a commercial trash bin locking system.

US 2015/041468 A1 discloses a grease container.

US 4456141 A discloses waste containers.

KR 101516737 B1 discloses a method for producing animal feeds.

US 4150795 A discloses a waste food processor.

US 2002/0122850 A1 discloses a process for preparation of animal feed from food waste.

### Summary

In an aspect of the present invention, there is provided a process for producing animal feed from food waste according to Claim 1.

The present disclosure relates generally to apparatus, methods and systems for promoting and encouraging the beneficial recycling of food waste. As will become apparent from the disclosure set out below, the overarching purpose of the present disclosure is to simplify the collection of food waste such that substantially no effort is required by the producers of the food waste and much of the process is automated. In this manner, a volume of food waste is obtainable (at a relatively low cost) that can be used to produce a corresponding volume of a vendible product.

There is provided a tamper resistant lid assembly for a receptacle. The lid assembly is locatable over an opening of the receptacle and comprises a first lid that is operable by a user and which comprises a lock for locking the first lid in a closed configuration; and a second lid that is operable independently of the first lid, the second lid being biased into a closed configuration but openable by a collector of the receptacle in order to empty the receptacle. The assembly is configured such that the second lid is not manually openable.

As will be described in further detail below, the inventor discovered that certain categories of food waste can be processed to produce an animal feed (or a feedstock for an animal feed) having a relatively consistent nutritional profile. As such, the inventor realised that it would be beneficial to maintain different categories of food waste separately for and during collection. As part of such a collection process, it is important to ensure that contamination of the sources of food waste does not occur (both cross-contamination with other categorised wastes and contamination with foreign objects). Providing waste food receptacles which, once locked by the user (e.g. café owner), cannot readily be opened by a person can ensure (or at least significantly reduce the likelihood of) that potentially-contaminating materials cannot be added to the receptacle (e.g. when it has been placed on the side of the road for collection).

There is also provided a food waste collector for collecting food waste from food waste receptacles which are being used by producers of categorised food waste. The food waste collector comprises a vehicle operable to move the food waste collector between the producers of categorised food waste; a plurality of chambers, into each of which is receivable a respective category of food waste; and a lifter for lifting a food waste receptacle and, based on a characteristic of the food waste receptacle, aligning the receptacle with a predetermined one of the plurality of chambers for emptying.

The food waste collector of the present disclosure advantageously enables the collection of food waste receptacles (e.g. the receptacle disclosed above) using a vehicle that can be moved between the producers of food waste and collect and empty the receptacles with minimal operator input. Operation of this vehicle can even further automate and streamline the collection of food waste, whilst maintaining the different categories of food wastes separately during their collection and transfer.

As would be appreciated, any savings of time and effort that can be achieved in this regard would help to improve the likelihood of food waste producers utilizing the receptacle of the present disclosure. Specific embodiments of the present disclosure (some of which will be described below) will even further reduce the effort required by a food waste producer to dispose of their food waste, which is more likely to result in a significantly improved degree of compliance and hence increase the proportion of food waste that can be recycled instead of being sent to landfill. In some embodiments (some examples of which are described below), it is envisaged that the food waste producer will need to take almost no action to empty the food waste receptacle, leaving them to concentrate on other aspects of their business.

There is further provided a process for producing animal feed from food waste. The process comprises providing a categorised food waste collected from producers of the categorised food waste; treating the categorised food waste to destroy substantially all pathogens (e.g. by heating); grinding the categorised food waste (e.g. to form a paste); and forming the treated and ground food waste into an animal feed (e.g. by extrusion or rolling).

The process may further comprise blending the treated and ground categorised food waste with one or more different treated and ground categorised food wastes, whereby the resultant animal feed has a desired nutritional profile.

As noted above, the inventor discovered that certain categories of food waste can be processed to produce an animal feed (or a feedstock for an animal feed) having a relatively consistent nutritional profile. As such, the inventor realised that it might be beneficial to separately process different categories of food waste in order to produce feed stocks for animal feed and/or animal feeds which have desirable nutritional properties (e.g. high protein levels).

In some embodiments, different feedstocks (having known nutritional profiles) may be mixed in order to produce an animal feed having desirable nutritional properties, meaning that it may not be necessary to incur the expense of adding nutrients or other additives (such as proteins or minerals) in order to meet threshold criteria (protein content being one of the more important) for the animal feed. Indeed, in some embodiments, it is possible to produce animal feeds solely from food wastes without requiring the addition of extra nutrients, potentially resulting in significant cost savings.

Turning food waste into animal feed, instead of sending it to landfill, can have numerous, immediately apparent, benefits. Animal feed, and especially animal feed produced from human quality food, is a product that can be sold. Even if not, however, the animal feed has been produced from food waste that might otherwise have ended up in landfill, with the associated costs (both environmental and monetary). Furthermore, when used in combination with the system of the present disclosure, given the scale and frequency of the collections, an animal feed having a relatively consistent quality is likely to be able to be produced.

The present disclosure involves the categorization of different food wastes, based on characteristics of those food wastes which may impart relatively consistent nutritional profiles or which require similar treatments in order to prevent spoilage. For example, the inventor has found that food waste from bakers, cafés and butchers, for example, can be processed separately to provide a feedstock for a resultant animal feed. Such categories of food wastes may need to be processed slightly differently, for example, fruit and vegetables or bakery waste are unlikely to carry the same type and amount of pathogens as would food waste from a butcher, for example. Process efficiencies may therefore be achievable by storing and processing the different categories of food waste separately. In contrast, animal feed produced from mixed categories of food wastes (e.g. where food wastes from multiple sources are combined in one collection), whilst still being a vendible product, can have highly variable properties (particularly its protein content), and may require the addition of nutritional supplements in order for its nutritional content to meet threshold requirements. Further, mixed food waste would typically need to be treated to destroy the level of pathogens that may be present in the worst possible type of food waste, which may not appropriate (or necessary) for all categories of food waste.

In some embodiments, the process of the present disclosure may be performed without resulting in the production of any waste material, with the animal feed being the only solid product and a liquid stream capable of being used as a fertiliser being the only liquid product.

There is also provided a system for recycling food waste. The system comprises periodically collecting food waste contained in standardised food waste receptacles from producers of food waste, the food waste being collected using a food waste collector adapted to automatically empty the receptacles into separate chambers dependant on a category of food waste in the receptacles; and processing an accumulation of collected food waste.

Operation of the system of the present disclosure results in food waste that has been produced by establishments such as supermarkets, bakeries, butchers, restaurants and cafes being collected, with a minimum of effort being required by both the operator of the food waste collector (due to the automatic emptying) and the producer of food waste. The accumulated collected food waste (e.g. that collected over the course of a morning's collections) can then readily be transferred to a processing plant (e.g. for beneficial processing) instead of ending up in landfill, as might otherwise be the case. Processing of the food waste may result in the production of a beneficial and possibly vendible product, such as animal food (as described below), electricity (e.g. via an anaerobic digestions process that produces a combustible gas) or fertilizers (solid or liquid). It is envisaged that such products may provide a significant source of income in addition to the benefits associated with reducing the amount of food waste sent to landfill.

Also disclosed herein is a receptacle for receiving and storing food waste. The receptacle comprises a food waste inlet and a chamber for storing food waste, and is configured such that food waste in the chamber is automatically emptyable into a food waste collector. The receptacle is advantageously automatically emptyable into a food waste collector, which can thereby simplify the emptying process, reduce the manual effort required to empty the receptacle and hence lessen the time taken to do so.

Also disclosed herein is another form of a food waste collector for collecting food waste from food waste receptacles, the food waste receptacles being used by respective producers of food waste. This food waste collector comprises a vehicle operable to move the food waste collector between the producers of food waste; a collection inlet that is configured to receive an outlet of the food waste receptacle; an outlet actuator operable to open and close the outlet; and a chamber for receiving food waste emptied from the food waste receptacle.

The various aspects of the present disclosure, as described herein, can interrelate in order to increasingly simplify the role of a food waste producer in the recycling of their food waste. Such simplification is not only likely to increase compliance with the appropriate disposal of food waste, but is also capable of producing a vendible product such as animal feed or electricity. Decreasing (or even eliminating) the cost to a food waste producer for disposing of their food waste would only serve to even further increase the likelihood of compliance with the appropriate disposal of food waste

Additional features and advantages of the various aspects of the present disclosure will be described below in the context of specific embodiments. It will be appreciated, however, that such additional features may have a more general applicability in the present disclosure than that described in the context of these specific embodiments.

### Brief Description of Drawings

Embodiments will be described in further detail below with reference to the following drawings, in which:
Figures 1A and 1B show perspective views of a receptacle for receiving and storing food waste in accordance with an embodiment;
Figures 2A to 2D show the receptacle of Figure 1 being positioned underneath a kitchen food waste receiver;
Figures 3A to 3I show vertical cross sectional views of the receptacle of Figure 1 and kitchen food waste receiver of Figure 2 during various stages of operation;
Figures 4A to 4D show a collection vehicle in accordance with an embodiment, with the receptacle of Figure 1 being manually loaded and automatically emptied;
Figures 5A to 5E show a collection vehicle in accordance with another embodiment, with the receptacle of Figure 1 being automatically loaded and emptied;
Figures 6A and 6B show horizontal cross sectional views of the receptacle of Figure 1 being rinsed by a flow of water;
Figure 7A shows a perspective view of a tamper-resistant lid assembly for a receptacle for receiving and storing food waste in accordance with an embodiment;
Figure 7B shows a perspective view of the assembly of Figure 7A, with its first lid in an open configuration;
Figure 7C shows a perspective view of the assembly of Figure 7A, with its second lid in an open configuration;
Figures 8A to 8E are a sequence of drawings which show how the second lid of the receptacle of Figure 7A can be automatically opened by the lifting arms of a food waste collector in accordance with an embodiment;
Figures 9A and 9B show side and top views of a food waste collector in accordance with an embodiment, with a receptacle for receiving and storing food waste in accordance with another embodiment adjacent thereto;
Figure 9C shows a side view of the food waste collector of Figure 9A, with the receptacle in a receptacle emptying position;
Figure 9D shows a side view of the food waste collector of Figure 9A, with the receptacle in a receptacle cleaning position;
Figure 9E shows a cross-sectional view of the food waste collector of Figure 9A with the receptacle in the same position as depicted in Figure 9D;
Figures 10A to 10K show a cross-sectional view of the food waste collector of Figure 9A, which is being operated to collect, empty, wash and return the receptacle of Figure 7A;
Figure 11A is an end view of the food waste collector of Figure 9A;
Figure 11B is a cross-sectional view of the food waste collector of Figure 9A, taken through one of its hoppers; and
Figures 11C and 11D show top and side views of the food waste collector of Figure 9A, which is being operated to empty food waste contained in its hoppers into a receptacle at a processing plant.

### Description of Embodiments

As noted above, the overarching purpose of the present disclosure is to provide apparatus and systems that simplify (and potentially make cheaper) the collection of food waste such that very little (if any) effort is required by food waste producers. Such are not only likely to increase the amount of food waste being recycled instead of being sent to landfill, but may also result in the production of significant quantities of a vendible product such as animal feed. Animal feed having a high quality (as would be expected to be the case for animal feed produced using food originally intended for human consumption, categorised into distinct food waste streams and collected and processed whilst still relatively fresh) is likely to be a highly sought after product.

Due to the likely economies of scale and the envisaged regular (daily, in some cases) collection of the food waste, the collection costs may well be offsetable by the sale of the vendible product. Decreasing (or even eliminating) the cost to a producer of food waste would only serve to even further increase the likelihood of compliance with recycling of their food waste. Reducing the amount of food waste that gets sent to landfill would be beneficial for both environmental and financial reasons.

As used herein, the term "food waste", "food scraps" and the like, is intended to encompass all kinds of food scraps, including (but not limited to) coffee grounds, vegetable matter, dairy products, bakery waste, meat off-cuts and bones, and seafood shells (e.g. oysters, mussels, lobsters, etc.). As will be appreciated from the description of the advantages of the present invention set out above, the anticipated attractiveness of the present invention to food waste producers resides in the simplicity of the offering to them. Providing a receptacle into which all food waste produced in a restaurant (for example) can be emptied is likely to significantly increase use of the receptacle. It is envisaged that this, in combination with a regular collection service that the restaurant (for example) does not necessarily need to organise, will make a significant contribution to the reduction of food waste ending up in landfill.

As used herein, the term "food waste producers", "producers of food waste" and the like, is intended to encompass any establishment that produces a commercial quantity of food waste on a regular basis. Food waste producers include, but are not limited to, restaurants, cafes, supermarkets, grocers, greengrocers, delicatessens, butchers and bakeries.

Food wastes may be categorised in a number of different ways and based on a number of different criteria, depending primarily on the desired end use of the food waste. For example, the nutritional characteristics of food waste collected from producers of a number of different types of food wastes would be expected to vary quite significantly from batch to batch. Bakers, for example, would produce food waste that would be unlikely to be as high in protein content as would waste from a butcher, for example. If the proportion of food waste from a bakery in one batch is different to the proportion of bakery food waste in another batch, the nutritional profiles of the batches are unlikely to be consistent with one another.

The inventor has discovered that food waste collected only from bakeries (and the like) and processed independently of other streams of food wastes results in a processed food waste (e.g. a feedstock for an animal feed) having a remarkably consistent nutritional profile. Similarly, food wastes collected from sources such as restaurants/cafes, greengrocers and butchers all have relatively consistent nutritional profiles. These food wastes can be combined and processed independent of other types/categories of food waste in order to produce a "Feedstock" for subsequent processing.

Feedstocks produced by blending different categories of partially-processed food waste can therefore provide animal feed having desirable nutritional properties, possibly without requiring the addition of further nutrients.

Criteria which might be used to categorise food wastes includes their source, nutritional profile compatibility of ingredients, processing requirements, bacterial loading, etc.

In contrast, co-mingled food waste obtained from a variety of sources can result in processed food waste products with highly variable and less predictable characteristics and nutritional profiles. Such food waste products may need to be individually tested in order to determine their nutritional profile and suitability for use as an animal feed, and would be more likely to require the addition of further nutrients.

In some embodiments, for example, food wastes may be defined in four (relatively) broad categories, namely: food waste from cafes and restaurants, food waste from bakeries, food waste from butchers, food waste from supermarkets and greengrocers. Other categories could be added to this list, or some of these categories could be further refined if such was practicable.

As would be appreciated, some categories of food wastes may require less processing then others for subsequent beneficial use, which may enable process efficiencies to advantageously be used in order to decrease the overall cost. For example, food waste from a butcher would be likely to require more processing in order to substantially destroy all pathogens than would food waste from a baker, for example. In non-segregated food wastes, the entirety of the waste would need to be treated as if it was all meat products, but in embodiments where the waste is segregated, then each category of waste can be treated separately. Different food wastes may also require different processing steps (e.g. to destroy pathogens), with the treatment regime for one food type of food waste being unsuitable (or inadequate) for another type of food waste.

As will be appreciated, some of the animal feed produced in accordance with the present invention may contain meat products and therefore only be suitable for feeding animals that are able to eat potentially meat-containing animal feed. Animals that can eat such feed include most omnivores, such as chickens, ducks, game birds such as pheasants, and shellfish such as yabbies.

Various forms of the present disclosure will now be described in general terms. It is convenient to firstly describe the system, followed by the tamper-resistant lid assembly, receptacle and food waste collector, in embodiments thereof where they are adapted for use in this system, will then be described. Finally, the process of the present invention, via which food waste collected as described herein is processed, will be described.

### System for recycling food waste

As noted above, a system for recycling food waste is disclosed. The system comprises periodically collecting food waste contained in standardised food waste receptacles from producers of food waste, the food waste being collected using a food waste collector adapted to automatically empty the receptacles into separate chambers dependant on a category of food waste in the receptacles; and processing an accumulation of collected food waste.

The system involves the periodic collection of standardised food waste receptacles from producers of food waste. The standardised food waste receptacle may have previously been supplied to the food waste producer, for example, when they subscribed to the collection service. The food waste receptacles may, in some embodiments, be supplied for free, with a subscription fee being payable depending on how frequently the receptacle is to be collected and emptied. In some embodiments, the standardised food waste receptacle of a food waste producer may be replaced during the collection service. Alternatively, the same (emptied) standardised food waste receptacle may be returned to the food waste producer after emptying (and possibly cleaning).

The food waste receptacles are standardised in that they would typically all have the same shape and configuration, in order to be compatible with and facilitate their interactions with food waste collectors during emptying. As would be appreciated, however, establishments such as supermarkets would be likely to produce a significantly greater volume of food waste that would establishments such as cafes (for example). Thus, a standardised food waste receptacle supplied to a supermarket would typically be larger than that supplied to a cafe. As will be discussed in further detail below, a food waste collector may be configured to collect food waste from receptacles having different sizes or alternatively, different food waste collectors used to collect different sized food waste receptacles.

In some embodiments, each producer of food waste may have more than one receptacle, especially if the amount of food waste produced is unusually large or if the producer produces two (or more) different categories of food wastes (e.g. supermarkets may have fruit & vegetable sections, a bakery and a butcher). Typically, however, the food waste receptacles would be of a size capable of storing a sufficient quantity of food waste such that the vast majority of producers of food waste require only one food waste receptacle. Receptacles having a size of around 200 litres are envisaged for use with restaurants, cafes and the like, with much larger receptacles (up to about 1,000 litres or more, for example) are envisaged for use with larger producers of food waste, such as supermarkets and the like.

The food waste receptacles are periodically collected and emptied. The frequency of collection may be determined by a number of factors, including the amount of food waste produced on a daily basis and the type of food waste. It is envisaged that food waste contained in the food waste receptacles be collected reasonably frequently, especially in the warmer months, because co-mingled food waste (even food waste from the same category) will tend to spoil relatively quickly and cause unpleasant odours (unless stored in substantially anoxic conditions, as described below). Furthermore, storing food waste for too long might increase the risk of attracting vermin. Hence, a more frequent collection service would reduce the availability of food waste for such vermin and hopefully reduce their population.

It is envisaged that large producers of food waste would likely require their food waste to be collected on a daily basis, for example, shortly after closing time (e.g. in the case of a bakery). However, smaller producers of food waste may only produce a volume of waste (e.g. about 70 litres per day) that requires collection every 2, 3, 4, or 5 working days (and especially so where the food waste is stored in an air conditioned environment or in the substantially anoxic conditions described below).

The collection times may, in some embodiments, be scheduled either by the collection service provider or by the food waste producer themselves. In some embodiments, for example, the food waste collection service might be scheduled to mimic the collection of other forms of waste (e.g. general rubbish) from the establishment. Alternatively, the food waste producer may initiate a request for collection when they deem it necessary, with the nearest available food waste collector being dispatched to collect and empty the receptacle as soon as is practically possible. Such a process could operate over the internet, using appropriate software applications and computing devices.

In some embodiments, the food waste receptacles themselves may have "smart" functions, including a sensor that is capable of sensing a level of food waste in the receptacle and transmitting a signal (either to the collector of the food waste, or to the producer of the food waste for them to contact the collector) once a predetermined level is reached. Alternatively, the food waste receptacles may transmit a collection request when a predetermined time has elapsed since the food waste receptacle was last emptied.

The system may involve the collection of any number of food waste receptacles from producers of food waste, until such time as the food waste collector reaches its capacity or time runs out (e.g. the operator's shift is coming towards an end or additional food scraps are required for processing).

The route the food waste collector takes in operation of the system may be set according to a schedule, or may be adaptable in order to make as many collections as possible, depending on the time available and remaining capacity of the food waste collector. For example, in a relatively "low-tech" embodiment, a food waste collector is allocated to a specific area and collects all of the food waste receptacles located in food waste producing establishments in that area before returning to the processing plant to empty the accumulated food waste. In a relatively "High-tech" embodiment, however, the food waste collector may be allocated to a specific area and tasked with collecting waste from food waste receptacles in that area, but also be capable of receiving data indicative of the quantity of waste in any "smart" receptacles, as well as factoring in any specific collection requests by food waste producers. The collector may even be able to anticipate whether or not the amount of food waste produced in that area is likely to under or over-fill the collector, with the collection area being expanded or contracted in response. In this manner, the resources being used in the system can be utilised to their best advantage.

In some embodiments, especially for large establishments such as supermarkets or bakeries, a collection run may involve a single trip to the establishment (e.g. immediately after it closes), with all of the food waste being collected on that run. The food waste collector may then either immediately return to the processing plant, or return via other establishments if time and capacity permits.

The food waste collector in the system disclosed herein may, for example, comprise a display that directs its operator between producers of food waste requiring collection of their food waste receptacles. The display may be provided on a computing device capable of receiving real-time updates and changing the future collection schedule in response to requests received from individual food waste producers in the vicinity of the food waste collector.

The food waste collector in the system disclosed herein typically comprises a vehicle that is drivable between producers of food waste. Such a vehicle should be easily operable by a person, both from a driving and receptacle emptying perspective. Given that many of the establishments from which food waste is to be collected will be located in densely populated areas (especially cafes, restaurants, butchers, bakeries, etc.), the vehicle should ideally be relatively small, so that it does not adversely impact on vehicular and pedestrian traffic during collection runs. The food waste collector will, however, need to have a useful food waste carrying capacity, and larger collectors may be provided as dedicated collectors of food waste from larger establishments such as supermarkets (noting that such establishments are constructed with large vehicle access in mind for the delivery of goods). Further, the vehicle will also need to be driven both to the collection area then, once full or the collection run is complete, to the processing facility. Driverless technologies might also be used to advantage here.

The food waste collector is adapted to automatically empty the receptacles into their respective chambers, depending on the category of food waste, in order to minimise the effort required by the operator, as well as to speed up the collection process. Any suitable method may be used to automatically empty the receptacles including, for example, an applied suction or the action of gravity. Typically (and especially where the receptacle is for use in establishments such as restaurants and cafes, where collection may be less frequent and the food waste likely to be "wetter" than would be the case, for example, in a bakery), the food waste collector is also adapted to rinse the receptacle before returning it to the producer of food waste, as accumulated food waste will quickly start to produce undesirable bacteria (and odours), which may be detrimental to the quality of the food waste for subsequent processing. The volume of fluid (typically water, although a cleaning solution such as a weak bicarbonate solution might also be used) used to rinse the receptacle should be kept to a minimum as it will probably not be able to be discharged, but will need to be carried in the food waste collector, along with the accumulated food waste, to the processing facility.

Two specific embodiments via which the food waste collector may be adapted to automatically empty a food waste receptacle will now be briefly described. These embodiments will also be described in further detail below in the context of the receptacle and food waste collector. These embodiments are generally applicable to the collection of food waste from all establishments, but in particular to the collection of food waste from smaller establishments such as cafes and restaurants.

In a first embodiment, food waste contained within the receptacle is collected by placing the receptacle into a docking station of the food waste collector (i.e. the receptacle, typically located inside the establishment (e.g. restaurant) is transported (e.g. by being wheeled on a trolley or, less likely, carried) to the collector, which is typically parked outside). Once docked, an empty cycle and, optionally, a rinse cycle automatically empties and then rinses the receptacle for returning to the producer of food waste. The empty cycle may comprise opening an outlet of the docked receptacle and removing food scraps contained within the receptacle, or may comprise the suction of flowable food waste (e.g. which has been macerated) out of the receptacle. The rinse cycle may comprise spraying water into an interior of the receptacle after removal of the food scraps.

In alternative forms, the food waste collector may be configured to pick up the receptacle and move it into the orientation and location necessary to empty the food waste contained therein into the collector (e.g. by tipping the receptacle upside down above a food waste-receiving opening). As described herein, the inventor recognised that it may be beneficial to separate different categories of food waste from each other, both during collection and in subsequent processing. Food waste receptacles which are used by producers of categorised food waste are therefore collected in a manner which ensures that the different categories of food waste remain separate from each other in the collector.

A rinse cycle may be carried out using any suitable technique. In some embodiments, for example, the rinse cycle may comprise inserting a sprinkler at the end of a probe into the interior of the receptacle. Alternatively, the rinse cycle may comprise pumping water through channels provided in the receptacle (e.g. via cavities in its walls), whereby the water is caused to flow over inner walls of the receptacle.

In a second embodiment (described in further detail below and more suited to establishments such as restaurants and cafes), food waste contained within the receptacle may be collected without having to move the receptacle from inside the establishment (e.g. restaurant), which may enable collection outside of business hours or with even less disturbance. In such an embodiment, an automatically openable outlet of the receptacle is in fluid communication with a conduit which leads to a collection outlet that is accessible by the food waste collector, and food waste is transferred to the food waste collector via the conduit (e.g. by sucking).

As will be described in further detail below in the context of the receptacle and vehicle of the present disclosure, in some embodiments, the food waste collector may be adapted to store the collected food waste in substantially anoxic conditions in order to further delay spoilage of the food waste.

The accumulated collected food waste collected via the system disclosed herein is subsequently processed, typically in order to produce a beneficial product. Potential beneficial products that may be obtained via the system include animal feed, fertiliser or electricity (e.g. via an anaerobic digestion process that produces a combustible gas).

The food waste may be processed to produce fertiliser or electricity using processes known in the art. Processes via which the accumulated collected food waste may be turned into an animal feed are described in further detail below. Advantageously, animal feed is a vendible product, and especially when it is produced from a high quality food waste (i.e. as would be expected to be the case when food originally intended for human consumption is used to make it).

### Tamper-resistant lid assembly and food waste receptacle

A tamper-resistant lid assembly for a receptacle is also disclosed herein. The lid assembly is locatable over an opening of the receptacle (e.g. as described below) and comprises a first lid that is operable by a user and which comprises a lock for locking the first lid in a closed configuration, and a second lid that is operable independently of the first lid, the second lid being biased into a closed configuration but openable by a collector of the receptacle in order to empty the receptacle. The assembly is configured such that the second lid is not manually openable.

The second lid not being "manually openable" means that the assembly is configured such that a person cannot readily and without mechanical assistance open the second lid (and hence gain access to the interior of the receptacle, where they map place potentially contaminating objects). It will be appreciated, however, that it simply might not be possible to prevent a person having appropriate tools and malicious intent from opening the second lid. In effect, the lid assembly is tamper-resistant, and not tamper-proof.

Providing a lid assembly having dual lids, one of which is lockable by a user (e.g. the personnel in a restaurant's kitchen) when the receptacle is to be left in a position where it can be accessed by the collector (e.g. on the side of a road in front of the restaurant) in order to prevent potentially contaminating rubbish from being placed therein, whilst still being openable by a collector in order to empty the receptacle, is consistent with the overarching purposes of the present disclosure. In use of this lid assembly/receptacle, the producer of the food waste has unhindered access to the receptacle for emptying their food waste into it, and needs do nothing more than lock the (first) lid before placing the receptacle out for collection. The collector, being capable of opening the second lid, has no need for a key, but is configured to automatically open the second lid in order to empty the receptacle.

In some embodiments, the second lid is moveable between the closed configuration and an open configuration by pivoting about an edge of the second lid. The second lid may, for example, be pivotable about an axis defined by a member via which the second lid is joined to the receptacle. The second lid may, for example, be biased into the closed configuration by a torsional spring located within the member.

In some embodiments, one or both ends of the member may comprise a coupling configured to be received within a corresponding coupling of the collector, whereby rotation of the coupling(s) by the collector opens the second lid. Such a configuration enables the second lid to be openable by the collector, but not easily opened by other parties (e.g. those passing the receptacle and wanting to throw away rubbish which they are carrying) in order to not compromise the food waste contained therein.

The torsional spring may itself apply a bias of a strength sufficient to prevent the second lid from being manually opened by a person (e.g. the spring has a tension which is greater than an average person is able to overcome), or may simply bias the second lid into the closed position, whereupon other mechanisms prevent the second lid from being manually opened. In some embodiments, for example, coupling of the lid's coupling and the collector's coupling may activate an unlocking mechanism between the second lid and the receptacle. Once so unlocked, the second lid is openable in order to empty out the contents of the receptacle. The bias applied to the second led subsequently causes it to close, and decoupling of the lid and collector's coupling relocks the second lid to the receptacle.

In other embodiments, the lid assembly may, for example, further comprise two or more second lid locks that need to be actuated before the collector of the receptacle can open the second lid. The second lid locks may, for example, be located on either sides of the receptacle/lid assembly, where they are actuated by the lifting arm of the food waste collector. The or each second lid lock may, in such embodiments, comprises a tab which, when pressed, opens the second lid lock.

Alternatively, a single second lid lock may be located on a front side of the bin (when orientated for collection), where it is actuated by the lifting arm of the food waste collector. In some embodiments, a combination of second lid lock(s) and biasing may contribute to the second lid not being manually openable.

In some embodiments, the lid assembly is configured such that opening of the second lid exposes substantially all of the opening of the receptacle. Opening the lid to this extent would help to reduce the likelihood of any of the food waste contained within the receptacle becoming caught on the lid during emptying. As would be appreciated, such leftover food waste would already have begun to spoil, and may contaminate and fresh food waste subsequently placed into the receptacle.

In some embodiments, the first lid may be contained within the second lid. In some embodiments, for example, the second lid may define a skirt extending around a periphery of the first lid. Such a configuration would enable each of the lids (particularly the first lid) to cover as large an area over the receptacle's opening as possible, in order for food waste to more easily be received into and emptied from the receptacle.

Whilst described herein in the context of a receptacle for food waste, it will be appreciated that the tamper-resistant lid assembly disclosed herein would also have application with receptacles for other kinds of materials and wastes.

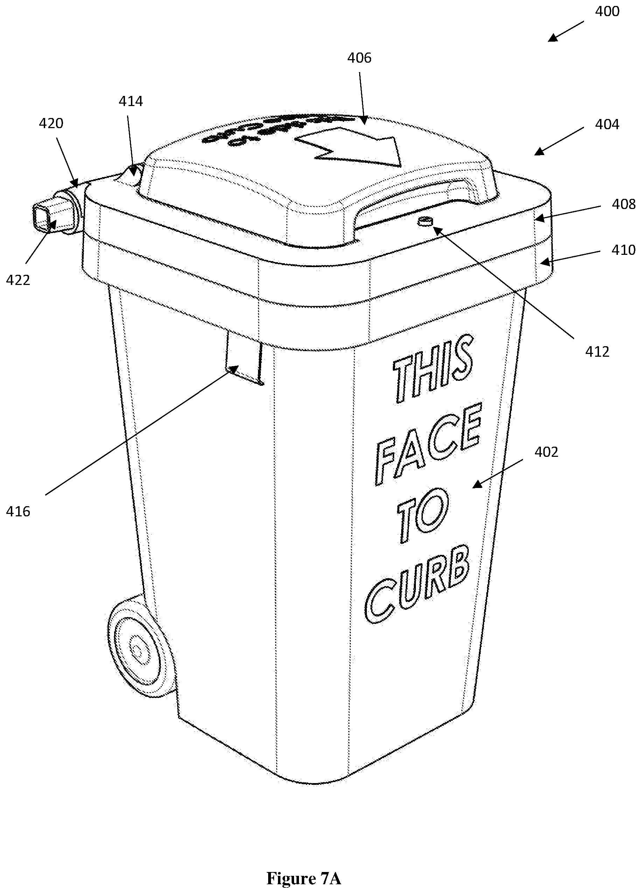

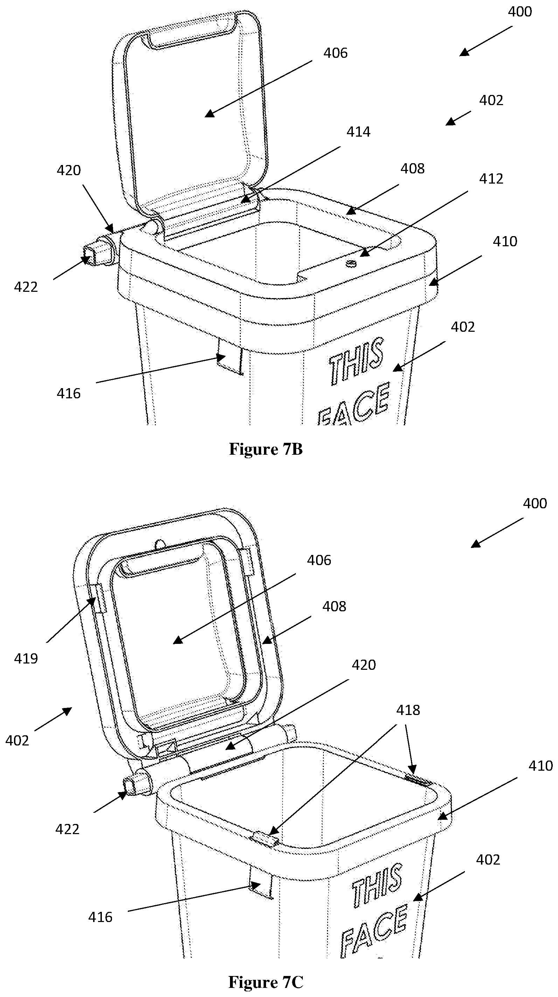

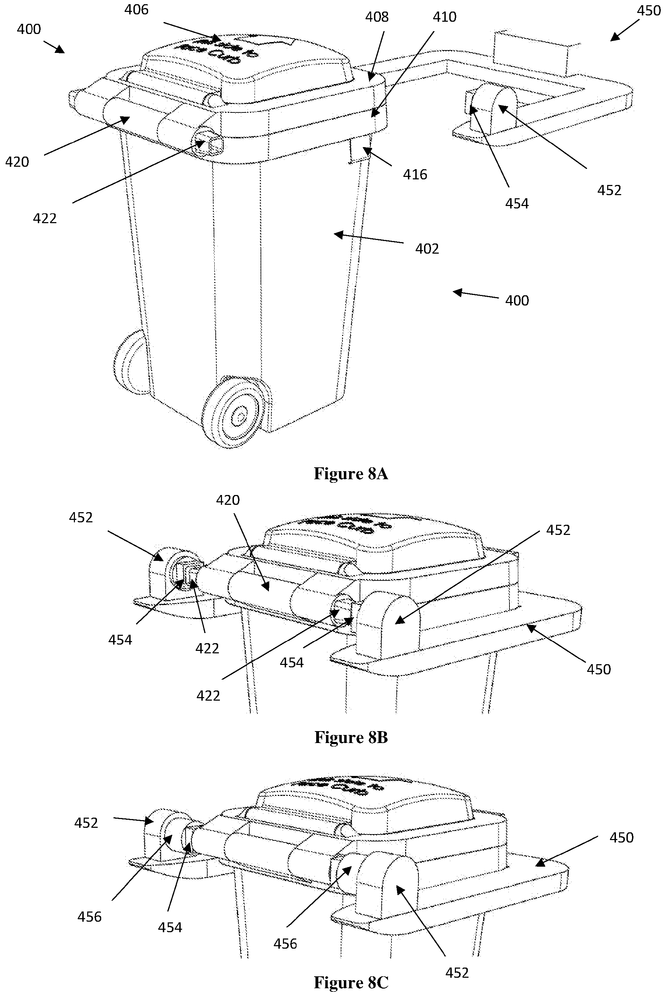

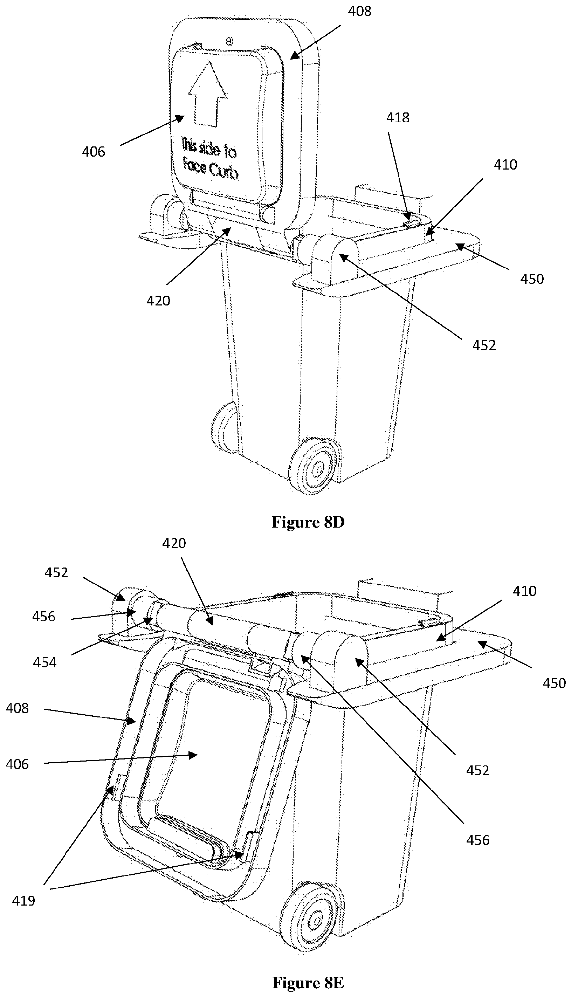

Also disclosed herein is a receptacle for receiving and storing food waste. The receptacle comprises a food waste inlet and a chamber for storing food waste, and is configured such that food waste in the chamber is automatically emptyable into a food waste collector. The receptacle is especially intended for use in the system disclosed herein, as described above, but may also be used in other circumstances. The receptacle may include the tamper-resistant lid assembly described above, an embodiment of which is shown in Figures 7 and 8 and described in further detail below.

The receptacle may have any shape that is compatible with its intended purpose and be formed from any suitable material. It is envisaged that the receptacle will typically be formed from a durable plastics material and have a shape that facilitates it being carried, much like other bins. The receptacle may have wheels in order to facilitate its movement, even if fully loaded with food waste (at which time it might be too heavy to safely lift). Alternatively, the food waste receptacle may sit on a trolley, upon which it can be wheeled around. In some embodiments, the receptacles may be stackable, which may help to reduce their volume during transport.

The food waste receptacle may also have other features, such as attachment points via which the receptacle can be grabbed and lifted (for example) by the food waste collector, or from which the receptacle may be suspended (e.g. below a kitchen workbench having a hole into which food scraps can be swept).

The size of the receptacle (and, in particular, its chamber for storing food waste) will depend on the likely volume of food waste being produced by the respective establishment. As noted above, however, given the advantages associated with providing receptacles of a standardised size, it may (in some circumstances) be easier to provide two of such receptacles to an establishment producing a very large amount of food waste, rather than providing receptacles of various sizes. Obviously, as noted above, food waste receptacles for establishments such as cafes would probably not be appropriate for establishments such as supermarkets. Receptacles having a storage volume of between about 100 to 300 litres may, for example, be suitable for establishment such as restaurants and cafes (a busy cafe produces around 70 litres of food waste per day), although a balance needs to be struck between the available space and transportation of full laden larger receptacles. Receptacles having much larger volumes are envisaged for use with supermarkets, or the like, which would produce significantly more food waste. Receptacles having a capacity of 1,000 litres or more are envisaged for such applications.

The chamber for storing food waste may have any suitable configuration, provided that it is capable of storing food waste and is emptyable in accordance with the teachings contained herein. In some embodiments, for example, the interior of the chamber may simply be a void into which food waste is receivable and removable. Such a void would typically have a substantially rounded shape in order to facilitate the introduction and removal of food waste. The chamber for storing food waste may, for example, have an outward taper in order to facilitate its emptying.

In other embodiments, however, the interior of the chamber may comprise a structure that facilitates the input, storage and removal of food waste. The interior of the chamber may, for example, comprise two (or more) portions (or chambers) separated by a reciprocally slidable member. One of these portions may be adapted to receive food waste therein, whilst other of the portions contain a gas (e.g. air), where the gas becomes progressively more pressurised with the introduction of food waste into the chamber (i.e. the food waste-containing portion of the chamber). Advantageously, in such embodiments, a hydraulic pressure (i.e. caused by introduction of the food waste into the chamber) can be used to pressurise a gas (i.e. in the gas-containing portion of the chamber) which can subsequently be used, upon emptying of the receptacle, to drive the food waste out from the chamber. Also advantageously, food waste contained within such a chamber may be stored in the substantial absence of oxygen, which may delay spoiling of the food waste and production of the associated unpleasant odours etc. As would also be appreciated, the nutritional value of food waste may also decrease when it spoils, and maintaining food waste in its freshest possible condition may result in an animal feed (described below) having a higher nutritional content than may otherwise have been the case.

Such a chamber may include additional features including chamber partitions, a reciprocating member and one way valves through which air (i.e. for increasing or decreasing a pressure within the chamber or a portion thereof) or food waste may be introduced into or removed out from the chamber. In some embodiments, such chambers may effectively have a self-cleaning functionality, where sliding of the reciprocating member cleans the inner sides of the chamber. The structure and operation of a specific receptacle for receiving and storing food waste embodying this concept will be described in further detail below.

The food waste in the chamber may be automatically emptied into the food waste collector using any suitable mechanism or technique, primarily dependent on the nature of the collector, type of food waste, etc. In some embodiments, for example, the receptacle may comprise an automatically openable outlet via which food waste in the chamber is emptyable. The outlet may have any form capable of achieving this function, whilst also providing a seal that prevents leakage of food waste from the container. In some embodiments, for example, the outlet may comprise a slidable member located at a lower portion of the chamber. Sliding open such a member would cause the food waste to fall out of the chamber under the action of gravity. It should be noted, however, that the orientation of the bin in use might not be the same as it's orientation during emptying, so the position of the outlet need not necessarily be located at a lower portion of the chamber. In alternative embodiments, the outlet may comprise a pivoting lid located at an upper portion of the chamber.

In some embodiments, the chamber may be automatically emptyable upon application of pressure above a certain threshold to an automatically openable outlet of the chamber. Effectively, in such embodiments, the food waste would be sucked out of the chamber (with pressurised compartments in the chamber, if present, potentially contributing to this process). The outlet of the chamber may, for example, comprise a one way valve, of the kind known in the art.

The size of the outlet will depend on factors such as the form in which the food waste is stored in the chamber. For example, particulate food waste (e.g. un-diced food waste) would require a relatively large outlet for emptying the chamber, whereas diced food waste may require only a small outlet. Macerated food waste may be flowable, and hence a small outlet (e.g. located at a lowermost portion of the chamber) may suffice.

As noted above, for smaller establishments, the food waste receptacle would typically be located inside the establishment of the food waste producer, for example, in the kitchen area of a cafe or restaurant, where food scraps can be scraped off plates and bowls directly into the receptacle. The food waste collector, however, would almost certainly be of a size that necessitates that it remain outside, for example, temporarily parked in a rear lane. It would therefore be necessary to transport either the receptacle or the food waste contained therein to the collector.

Food waste in the chamber may, in a first embodiment, be automatically emptyable into a food waste collector by transporting (e.g. carrying or wheeling on a trolley, etc.) the receptacle to the food waste collector. In such embodiments, the receptacle may be configured to be received at a docking station of the food waste collector and, once docked, the outlet being openable and the chamber emptyable. Any suitable mechanical coupling may be utilised to achieve this function, specific embodiments of which will be described in further detail below.

Once emptied, it would generally be desirable to rinse out the chamber in order to remove any food waste that may have become stuck to the sides of the chamber, as well as to freshen the chamber and reduce the likelihood of unpleasant odours. This may be achieved by operation of a component of the collector (as will be described below), or by the provision of appropriate features in the receptacle itself. In some embodiments, for example, the receptacle may comprise a water inlet configured to be received at a water outlet of the food waste collector when docked. A flow of water delivered from the collection vehicle into the water inlet rinses the chamber. The receptacle may, for example, comprise channels (e.g. within the walls of the receptacle) which direct water delivered into the water inlet onto walls of the chamber.

As would be appreciated, however, food waste is relatively heavy and the size (and hence volume) of a receptacle that was capable of being carried would therefore be limited. Whilst it may be possible to utilise a trolley or the like to transport the receptacle (or providing a trolley with roller wheels, as described above), manoeuvring such a trolley/receptacle might sometimes be problematic, as especially in restaurants and cafes, where space is often at a premium. Further, carrying or wheeling a receptacle containing food waste through a restaurant or cafe may be undesirable for other reasons, such as the spreading of unpleasant odours or risk of spillage, etc. As would also be appreciated, food waste receptacles containing potentially thousands of litres of food waste would only be handleable using heavy lifting equipment which, whilst possible, might overly complicate the collection process. Accordingly, in alternative embodiments, referred to herein as a second embodiment, food waste in the chamber may be automatically emptyable into a food waste collector without having to transport the receptacle to the collector.

In such embodiments, the automatically openable outlet may be in fluid communication with a conduit which leads to a collection outlet that is accessible by the food waste collector, with food waste emptied from the chamber being transferred to the food waste collector via the conduit. Typically, the collection outlet would be located outside of the establishment, and in a location where it can be accessed by the collector. Such embodiments would require some plumbing work in order to join the outlet of the receptacle to the collection outlet that is accessible by the food waste collector, but the effort required to achieve this may outweigh the inconvenience of the food waste receptacle being periodically transported through the establishment during operating hours.

The outlet of the chamber is automatically openable in order to empty the food waste in the chamber. In this embodiment, there are two outlets (i.e. the chamber and collection outlets) through which the food waste must pass during emptying. The collection outlet is accessible to the operator of the food waste collector and may therefore be manually opened, but the chamber outlet is not so accessible and must therefore be automatically openable.

In some embodiments therefore, the automatically openable outlet may be caused to open upon receipt of a signal from the food waste collector. That is, when the food waste collector is in position, coupled to the collection outlet and ready to receive the food waste from the chamber, a signal is sent which actuates the chamber outlet. Alternatively (or in addition), a pressure applied to the collection outlet may cause a one way valve, or the like, at the outlet to open. Once open, the food waste is able to exit from the chamber through the outlet and, via the conduit, into the food waste collector. In order to improve such an operation, it is envisaged that a suction be applied by the collector to draw the food waste through the conduit and into the collector. Alternatively (or in addition) a pressure could be applied within the chamber to the same effect. In order to further improve such an operation, it is envisaged that food waste contained within the chamber be in a relatively flowable form (ways to achieve this are described below).

In some embodiments, the receptacle may also comprise a water inlet adapted to direct a flow of water through the chamber, and especially whilst food waste in the chamber is being transferred to the food waste collector via the conduit. Such a flow of water would both rinse the chamber to help remove all of the food waste, as well as increasing the flowability of the food waste, making it easier to transfer through the conduit. It would also be generally not desirable to allow food waste to reside in the (potentially reasonably long) conduit between the chamber and collection outlets between collections, and such a rinsing would help to substantially clear the conduit of food waste. Bearing in mind that the rinsing fluid would also be need to be carried by the food waste collector, the volume of fluid used should be kept to an absolute minimum.

In some embodiments, the receptacle (or the apparatus via which the food waste is fed to the receptacle) may further comprise a dicer for dicing food scraps before they reach the chamber. Such a dicer may be operable to dice the food scraps into smaller pieces, making them more homogeneous in nature and hence the chamber more easily emptied. Alternatively, or in addition, the food waste (or the apparatus via which the food waste is fed to the receptacle) may comprise a grinder for grinding food scraps before they reach the chamber. Macerated food ground into a paste, especially if mixed with water, would be relatively flowable and especially suitable for being sucked out of the chamber, as is the case for the second embodiment discussed above. In some embodiments, the receptacle (or the apparatus via which the food waste is fed to the receptacle) may further comprise a pump for pumping flowable (e.g. ground, macerated or shredded) food scraps into the chamber.

The receptacle may also include components that provide it with "smart" functionality, as described above. For example, the receptacle may comprise a sensor for sensing when food waste in the chamber reaches a predetermined level. The sensor may be operable to transmit a warning to the producer of food waste, or transmit a collection request directly to the collector, independent of the producer of food waste.

In specific embodiments of the receptacle (some of which will be described in further detail below), the automatically openable outlet may comprise a one way valve that is openable upon application of a suction pressure. In such embodiments, the food waste inlet of the receptacle may comprise a one way valve through which shredded food waste is pumpable into the chamber.

The chamber of the receptacle may, in such embodiments, comprise a first portion configured to receive food waste pumped into the chamber, a second portion containing a gas and a reciprocating member that separates the portions, where pumping food waste into the chamber causes the first portion to expand and the reciprocating member to compress the gas in the second portion. In such embodiments, upon application of a suction pressure, a gas pressure of the second portion may cause the reciprocating member to compress the first portion.

The receptacle may, in such embodiments, further comprise a valve configured to deliver gas into the second portion and/or an inlet configured to receive a fluid for rinsing the first portion. Advantageously, in such embodiments, the first portion may be maintained under substantially anoxic conditions, with the attendant benefits described herein.

### Food waste collector

A food waste collector for collecting food waste from food waste receptacles (e.g. the receptacles disclosed herein, as described above) being used by respective producers of categorised food waste (e.g. in cafes, restaurants, bakeries, etc.) is also disclosed herein. The collector comprises a vehicle operable to move the food waste collector between the producers of categorised food waste; a plurality of chambers, into each of which is receivable a respective category of food waste; and a lifter (e.g. an arm) for lifting a food waste receptacle and, based on a characteristic of the food waste receptacle, aligning the receptacle with a predetermined one of the plurality of chambers for emptying.

The inventor recognised that certain categories of food waste can be processed to produce an animal feed (or a feedstock for an animal feed) having a relatively consistent nutritional profile. The inventor therefore realised that it may be beneficial to separately collect different categories of food waste and maintain the categories of food wastes separately for their subsequent independent processing (as will be descried in further detail below) to produce an animal feed (or a feedstock for an animal feed) having a more consistent nutritional profile than may otherwise have been produced.

In some embodiments of the food waste collector, the lifter may be configured to lift a food waste receptacle positioned adjacent to the collector, slide the receptacle to a position adjacent the predetermined chamber and then empty the receptacle into the chamber.

In some embodiments, the food waste collector may further comprise a chamber for washing emptied receptacles, for the beneficial reasons described above.

In some embodiments, the characteristic of the food waste receptacle may be detectable by the food waste collector once in proximity to the food waste receptacle. For example, the receptacle may contain a RFID chip, or other electronic device, which is detectable by the collector (e.g. by a RFID reader located in the lifting arm of the collector, which comes into close proximity with the receptacle as it picks it up). Alternatively, the characteristic of the food waste receptacle may be provided by other means, either electronic or otherwise. In some embodiments, for example, the colour of the lid(s) of the receptacle may categorise the food waste receptacle.

The characteristic of the food waste receptacle detected by the detector informs the lifter into which of the plurality of chambers the receptacle is to be emptied, but may also contain or recall other information, such as the identity of the food waste producer. Such information can also be used to advantage, for example, for statistical purposes including data previously gathered regarding the receptacle's collection history. For example, information about the producer of the food waste and the last time the receptacle was collected could be useful in determining the likely quality of the food waste contained within the receptacle. For example, food waste that is more than a day old from a bakery may still be suitable for use in the process of the present invention, whilst food waste that is more than a day old from a restaurant is more likely to have spoilt and hence not be suitable (or be less suitable) for processing. In the latter embodiment, the information obtained from the receptacle and database may cause the arm to empty the receptacle into a general waste chamber of the collector, categorised as not for subsequent processing or for subsequent processing which does not require relatively "Fresh" food waste. Such general waste may subsequently be sent to landfill or, more preferably, used to form lower-value products such as liquid fertilizers.

In some embodiments, a levy may be applied to the producer of food waste if the food waste is not promptly delivered for collection and hence not beneficially processable in accordance with the present invention.

The food waste collector may, in some embodiments, further comprise gates located at a lowermost portion of each of the plurality of chambers, the gates being independently openable in order to empty any food waste contained within the respective chambers. In this manner, the collected food waste can be emptied from the collector relatively easily.

Whilst described herein in the context of a collecting food waste, it will be appreciated that the food waste collector would be equally capable of use for collecting and segregating other kinds of materials and wastes.

The food waste collector disclosed herein is especially intended for use in the system disclosed herein, as described above, but may also be used in other circumstances.

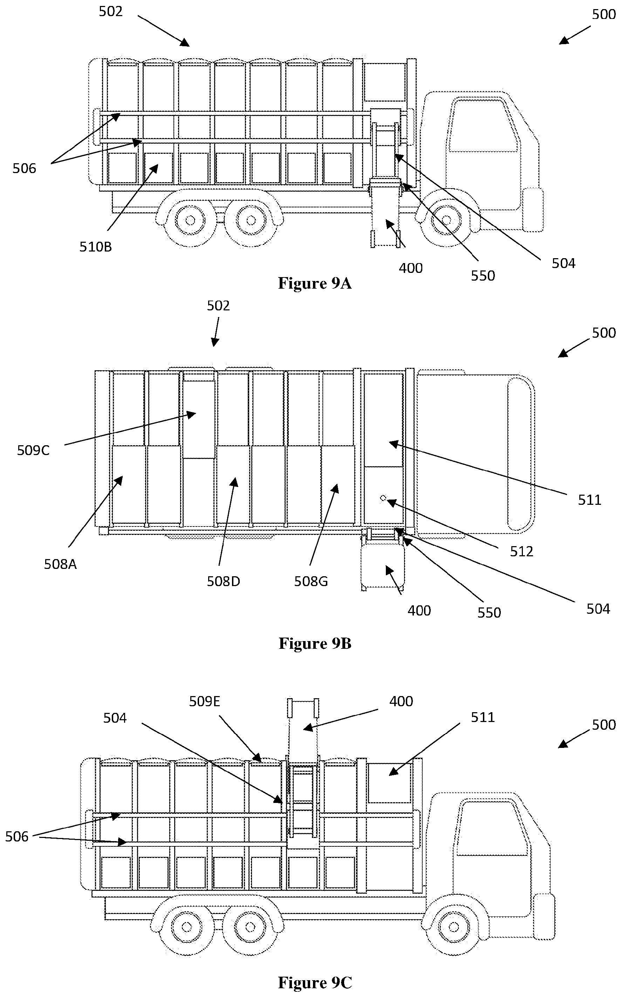

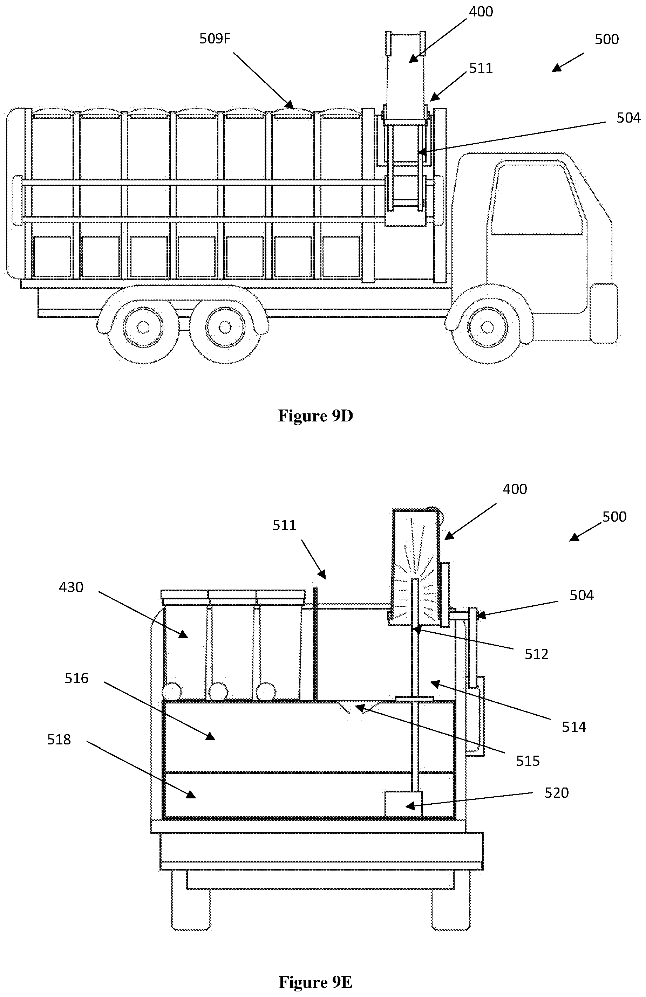

A specific embodiment of the food waste collector will be described below with reference to Figures 9 to 11. Other features of the food waste collector disclosed herein may be per those of the more general food waste collector described below (where such features are not incompatible).

Also disclosed herein is a more general food waste collector for collecting food waste from food waste receptacles being used by respective producers of food waste. This food waste collector comprises a vehicle operable to move the food waste collector between the producers of food waste; a collection inlet that is configured to receive (i.e. is coupleable to) an outlet of the food waste receptacle; an outlet actuator operable to open and close the outlet; and a chamber for receiving food waste emptied from the food waste receptacle. Such food waste collectors need not include a plurality of chambers in order to be useful, for example, food waste collectors having only one chamber could be used to collect the contents of large food waste receptacles (e.g. at a supermarket) for subsequent use in the process.

The food waste collector has (or is part of) a vehicle, which enables it to be driven between the producers of food waste during a collection run. Any suitable vehicle may be used with the collector, with the collector either forming part of the vehicle (i.e. as shown in the drawings) or being towed behind the vehicle. The vehicle may be driven using any kind of drive system, for example, drive systems based on electric motors or internal combustion motors. The vehicle may be controlled using any suitable control system, for example, as would be the case for a street sweeper, or the like. The size of the food waste collector will depend on the volume of food waste to be collected (and carried). In general, however, it would be more appropriate if the food waste collectors that collect food waste from establishments such as cafes and restaurants were relatively small. Larger food waste collectors could be used (or may be required) for collection of food waste from establishments such as supermarkets.

The food waste collector has a chamber (or a plurality of chambers, in the case of the food waste collector disclosed herein) for receiving food waste emptied from the food waste receptacle. The chamber may take any suitable form, depending primarily on the size and form of the food waste collector as a whole. The larger the chamber, the more food waste that is able to be carried by the food waste collector, but a balance needs to be struck between the weight of the food waste to be carried and other factors, such as the volume of rinsing water that may be required, the power of the motors, etc. The chamber would also itself include an outlet, via which the accumulated food waste can be emptied. Such an outlet may take any suitable form, and would typically be located on an underside of the collector.

The food waste collector has a collection inlet that is configured to receive an outlet of the receptacle (e.g. when the receptacle is coupled to the collection inlet). When the outlet of the receptacle is opened, the food waste contained therein goes through the collection inlet and into the chamber. The collection inlet may take any form suitable to achieve this purpose, and be located at any position on the collector.

In some embodiments, the collection inlet may comprise a docking station configured to receive the food waste receptacle thereat. The docking station would typically have a periphery that is shaped to guide the food waste receptacle towards the collection inlet, and may, for example, have raised walls therearound which taper towards the collection inlet. The docking station may be positioned such that the action of gravity will cause food waste emptied from the container to drop into the chamber, however, it should not be located in too high a position on the collector, given that the operator may have to lift the receptacle in order to dock it. Alternatively, the docking station may be positioned such that the food waste can be sucked out of the docked receptacle and directly into the collection inlet.

In some embodiments, the food waste collector may have an arm or arms which are adapted to lift the food waste receptacle from the ground to the collection inlet (e.g. they lift the food waste receptacle off its trolley and place it in the docking station described above), and vice versa. In some embodiments, the food waste collector may have a ramp, via which a food waste receptacle having wheels may be transported from the ground to the collection inlet.

In embodiments where the receptacle is to be rinsed after emptying, but before its return to the producer of food waste, the collector may also include a water outlet configured to deliver a flow of water that rinses the food waste receptacle (e.g. when docked). The water outlet may take any suitable form and may either spray water directly into the (now substantially empty) receptacle, or deliver water into channels provided in the receptacle and which directs the water appropriately within the chamber.

In some embodiments, the water outlet may be a sprinkler that is configured to move into the food waste receptacle through the outlet once the food waste has been emptied. Such a sprinkler may, for example, be provided at the distal end of a probe that is positioned substantially centrally within the receptacle, with a short but severe burst of water being used to rinse the receptacle.

As noted previously, given that the rinsing water needs to be carried by the collector both pre- and post-rinsing, the volume of water used per rinse should be kept to an absolute minimum. As also noted previously, fluids other than water might also be used, although these will need to be compatible with the end use of the food waste.

In embodiments where the receptacle is to be recharged with pressurised gas (e.g. air) after emptying, but before its return to the producer of food waste, the collector may also include a source of pressurised air (e.g. an air compressor) and an outlet configured to deliver air into the receptacle when docked.

In some embodiments, the progress of the emptying process may be indicated, for example using LED lights. Once docked, a red light may illuminate, indicating that the receptacle is being emptied. Once emptied, but before the rinse cycle starts, an orange light may illuminate. Finally, once the rinse cycle is complete (and the receptacle ready for removal), a green light may illuminate.

In alternative embodiments (as described above in the context of other aspects of the present disclosure), the collection inlet may comprise a conduit that is coupleable to the outlet of the food waste receptacle, and the collector further comprise a suction pump operable to suck food waste from the food waste receptacle. Suction pumps capable of drawing a flowable substance through a conduit are well known.

The food waste collector also has an outlet actuator operable to open and close the outlet. The outlet actuator operates using any suitable mechanism, and its form and nature depends primarily on that of the outlet of the food waste receptacle. In embodiments where the food waste receptacle has a slidable member located at a lower portion thereof, for example, the outlet actuator may be operable to open and close a slidable member located at a lower portion of the food waste receptacle (i.e. in the manner described above). In some embodiments, the outlet actuator may open the receptacle's outlet by applying a pressure in excess of that of the one way valve which closes the outlet. Once this pressure has been exceeded, food waste can be sucked out of the receptacle.

As will be described in further detail below, it is also envisaged that food waste in the food waste collector may be stored in substantially anoxic conditions.

The food waste collector may also include other features. For example, the collector may comprise a signal generator that is operable to generate a signal that causes the outlet of the food waste receptacle to open (as discussed above) and/or cause a flow of water to flow through the food waste receptacle. The collector may also include a GPS, which can be used to track the collector and with respect to a locational map of the area surrounding it. The collector may also have a display that directs an operator between producers of food waste requiring collection of their food waste receptacles.

The collector may also have a computer device that is connected, via the internet, to a system which monitors requests from producers of food waste in the vicinity of the collector to empty their receptacles. The device may also monitor parameters such as the quantity of accumulated food waste in the container, the volume of rinse water remaining, the anticipated volume of food waste awaiting collection and the time remaining to do so. Based on all of these factors, a calculation may be performed which directs the operator in the most efficient manner between the producers of food waste. Such a computer-operated system has the potential to vastly increase the efficiency of the collection runs, resulting in a more efficient process overall, as well as a more rapid collection service for individual food waste producers (possibly without them even having to check on the quantity of food waste in their receptacle).

### Process for producing animal feed

The present invention also provides a process for producing animal feed from food waste (e.g. food waste collected in accordance with the present invention, as described above). The process comprises:
producing a feedstock for the animal feed, the process comprising:
   providing a categorised food waste collected from producers of the categorised food waste;
   treating the categorised food waste to destroy substantially all pathogens;
   grinding the categorised food waste; and
   forming the treated and ground food waste into the feedstock, wherein the feedstock is dried, and
determining an amount of the feedstock which, when combined with an amount of a feedstock produced from a different categorised food waste, would produce an animal feed having a specific nutritional profile, and
blending the feedstocks to produce the animal feed having the specific nutritional profile.

The separate streams of categorised food wastes may be separately processed to produce feedstocks for an animal feed having a relatively consistent nutritional profile (as described above). The resultant feedstocks may be combined in specified proportions in order to produce animal feed having a specific nutritional profile (e.g. high, medium or low protein content chicken feed), possibly without requiring any additional nutrient sources (which would help to reduce costs). Indeed, in some embodiments, animal feeds having a range of nutritional profiles and suitable for use in numerous applications can be produced using only the collected food wastes.

In some embodiments, the diced and treated food wastes may be further dried in order to reduce their moisture content and make them more amenable to storage for short periods of time. In this manner, a stock of partially-processed animal feed (or feedstocks for animal feed) can be maintained for use as necessary.

The food waste is ground into smaller particles in order to form a workable composition (e.g. a paste or a powder). In this step, any shells or bones present in the food waste are also ground into particulate form. The presence of particulate shells or bones in the resultant animal feed would not be a problem due to their small size. Indeed, animals such as chickens require a certain amount of such a material in their diets, and its inclusion in the animal food produced in accordance with the present invention means that additional shell grit may not need to be purchased.

The food waste is treated to destroy substantially all pathogens. The food waste may be treated in any manner that will destroy substantially all pathogens. The most straightforward treatment would be to heat the food product to a temperature and for a time sufficient to destroy substantially all pathogens. Typically, the food waste would be steam treated using conventional steam treatment apparatus (e.g. a steam tunnel). However, other techniques (e.g. hyperbaric treatment) could also be utilised to achieve this.

The grinding and pathogen-destroying treatment steps may be carried out in any order. As the food waste is likely to contain a relatively high microbial load upon delivery to the process, however, it would usually be advantageous to treat it immediately upon receipt (e.g. by passing it immediately through a steam tunnel) in order to stop the microbial load from increasing (with the attendant production of toxins). This would especially be the case where the waste food presents as relatively small pieces (e.g. sourced from a restaurant or cafe) or if the waste food is less susceptible to microbial growth (e.g. bakery products). In embodiments where large pieces of food waste are to be processed, however, it may be advantageous to grind them (at least into smaller pieces) before treating the food waste to destroy substantially all pathogens.

The treated food waste may be formed into an animal feed using any suitable technique. The treated food waste may, for example, be extruded or pressed between rollers before being broken up into pieces of animal feed having appropriate characteristics for eating by the animal.

As would be appreciated, animal food having a nutrient content above certain thresholds may be required in order to meet regulatory or consumer demands, or command a premium price. In this regard, the present invention utilises waste food that was originally intended for human consumption, and would therefore be expected to have a high nutrient value. Furthermore, given the potential scale and sources of food waste in accordance with the present invention, it is likely that a relatively homogeneous food waste high in nutrient content will be supplied to the process of the present invention. Nevertheless, in some embodiments, a nutrient content of the food waste may be monitored during the process to ensure that the nutrient content remains above predefined thresholds. In the event of any given nutrient(s) falling below a predefined value the process may, in some embodiments, further comprise the addition of a source of such nutrient(s) at an appropriate stage. The resultant animal food can thus be guaranteed as having a nutrient content that exceeds specific values.

In some embodiments, for example, where measurement of the nutrient content of the food waste during the process indicates a protein content above a certain amount (e.g. about 23%), this product can be marketed as high protein food, which is more suitable to growing chickens and commands a higher price than animal feed having a lower protein content (e.g. about 17%).

In some embodiments, the animal feed may stick together without requiring any additional ingredients. It may, however, in some embodiments, be advantageous to add one or more binders to the food waste at an appropriate time. The quantity and nature of the binder will depend on the desired characteristics of the resultant animal feed.

The process may also involve a pre-step, in which any non-edible components in the food waste (e.g. plastic material), which might have inadvertently found their way into the food waste, are separated for disposal.

Any leftover waste material at the end of the process described herein would likely still be rich in nutrients and may be put to a beneficial use. For example, liquid waste left over from the process may be used as a liquid fertiliser. Advantageously, some embodiments of the process of the present invention may result in zero waste, with all solid products being suitable for animal feed and all liquid products suitable for use as fertilisers.

In a feasibility study commissioned by the inventor, food waste was collected from nine different sources (described below in Table 1) and processed in the following manner. The samples were immediately transported to the test laboratory, where they were placed on single layer large steam tunnel trays and carried into a steam tunnel via a conveyor belt. In this process, the samples were heated to a temperature of about 90°C and for a time which should kill the vast majority of any pathogens that may be present.

After the heat treatment, the samples were weighed and placed on disposable aluminium trays and dehydrated at 70°C in a large commercial dehydrator cabinet. After dehydration, the samples were re-weighed and their moisture loss was calculated (see Table 1). The dehydrated samples were then ground to a fine powder using a food blender and stored in a refrigerator. A chemical analyses (for moisture, fat, protein, Ca, Mg, Na, K and P) of each of the samples was undertaken.

Chicken feed pellets were prepared from the ground samples by blending and mixing specific proportions of each sample (see Table 2) into a dough with water. The dough was extruded through a Bottene pasta extruder using a number 8 die with a rotary cutter, which created 3mm x 6mm pellets. These pellets were dehydrated for 24 hours at 70°C, and the moisture, fat, protein, Ca, Mg, Na, K and P contents of pellets were determined.

Moisture was determined following standard procedures (AOAC 1990). Samples were homogenised and a 4-5 g sample analytically weighed into dry, 10 cm diameter, moisture dishes. Samples were placed in a 100°C air oven for 24 hours. Samples were removed and stored in a desiccator until cool. Samples were weighed and moisture content calculated as a percentage of the original weight.

Total fat content was determined using a Soxhlet apparatus and method (ISO Standard 4401-5, 1996). Samples were homogenised using a food processor and then evaluated. A 5 g sample was weighed (Sartorius Analytic A200S) onto filter paper (Whatman Ltd) and transferred to Soxhlet extraction thimbles (28 x 100 mm, Whatman Ltd) and dried at 100°C for 24 hours in an air oven (AOAC 1990). A measured 170 ml of petroleum spirit (Type II 40-60°C AR) was added to each pre-dried and weighed Soxhlet boiling flask, and samples were allowed to extract for at least two hours. Extraction was performed in a Buchi 810 Soxhlet fat extractor. Following extraction, Soxhlet flasks were dried to a constant weight at 100°C before desiccation and weighing. Total percentage of fat was calculated from the change in sample weight following extraction.

Protein content was determined using DUMAS rapid nitrogen/protein analyser (NDA 702). Using a spatula, a 150 mg sample was placed into the provide tin foil cup. The tin foil was closed, obtaining a capsule and the capsule loaded into the auto-sampler. The Animal feed dry method was selected using the following parameters: Protein factor: 6.25, O₂ flow rate: 400 ml/min, O₂ factor: 1.4 ml/mg.

The fat and protein contents of the food waste samples are shown in Table 1, set out below:

**Table 1 - yield, fat and protein contents of food waste samples**

| Sample no. | Source | Yield following initial heating (%w/w) | Fat (%) | Protein (%) |
|---|---|---|---|---|
| 1 | Café | 31 | 12.2 | 12.2 |
| 2 | Restaurant | 15 | 27.8 | 36.2 |
| 3 | Greengrocer | 7 | 3.5 | 11.8 |
| 4 | Café | 26 | 17.8 | 18 |
| 5 | Greengrocer | 5 | 4.3 | 18.8 |
| 6 | Retirement home | 25 | 22.6 | 27.9 |
| 7 | Services club | 25 | 16.5 | 40.4 |
| 8 | Services club | 28 | 21.9 | 22.5 |
| 9 | Bakery | 65 | 6.4 | 10 |

Protein content is one of the important parameters of chicken feed (and animal feed in general). As can be seen from Table 1, the protein contents of some of the dried waste samples are relatively high, and at least as high as the protein content of some of the common high value feed ingredients. This clearly demonstrates that protein rich, low cost food ingredients can be prepared from food waste. It should also be noted that the cost of (traditionally obtained) protein rich feed ingredients is relatively expensive, and getting more expensive due to limited supply.

Animal feed pellets were prepared by blending the proportions of the samples shown in Table 2, set out below, in the manner described above in order to produce pellets of chicken feed. The pellets were analysed and found to have a protein content of about 19% and a fat content of about 15%, making them vendible as high protein chicken feed.

**Table 2 - proportions of food waste samples in prepared chicken feed pellets**

| Sample no. | Proportion (%) |
|---|---|
| 1 | 14 |
| 2 | 10 |
| 3 | 3 |
| 4 | 6 |
| 5 | 3 |
| 6 | 16 |
| 7 | 2 |
| 8 | 8 |
| 9 | 38 |
| Total: | 100 |

In this method, 100g of food waste was processed to produce 39g of chicken feed pellets and 9g of liquid fertiliser.

Liquid waste recovered from the process was analysed for its nitrogen and phosphorous content (both in their readily and slowly available forms). It was found that the liquid waste had N and P contents significantly lower than those of commercially available liquid fertilisers. However, the liquid extract from the food waste contains both types of nutrients in both readily and slowly available forms, which might be beneficial for plants, and therefore still be a vendible product. If necessary, the liquid waste may be concentrated in order to provide a more potent fertiliser.

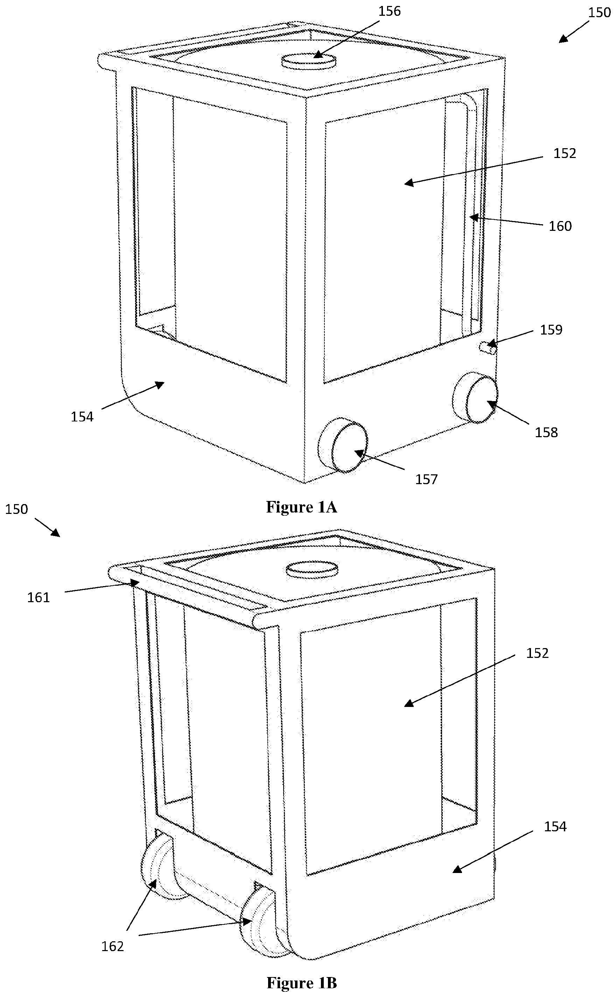

Specific embodiments will now be described with reference to the accompanying drawings. Referring firstly to Figures 1A and 1B, a receptacle for receiving and storing food waste is shown as food waste bin 150. Bin 150 has a chamber 152 for receiving and storing food waste in use (described below), which is contained within a frame 154. Both chamber 152 and frame 154 may be formed from plastic materials having a suitable strength (e.g. moulded plastic materials, which provide a good balance of strength, weight and price). Bin 150 also has an inlet opening 156 through which food waste may be pumped via a one way valve (not shown) into the chamber 152 (as described below), an outlet opening 157 through which food waste may be removed from the chamber 152 via a one way valve (not shown), as described below, a rinsing inlet 158 through which a rinsing fluid may be introduced via a one way valve (not shown) in order to rinse the chamber 152 (as described below) and an air pressure inlet 159 and conduit 160 through which pressurised air may be introduced into the chamber 152 in order to pressurise a portion of the chamber 152 for the reasons described below. Frame 154 has a handle 161 and wheels 162, 162, which enable the bin 150 to be easily maneuvered, even when full of food waste.

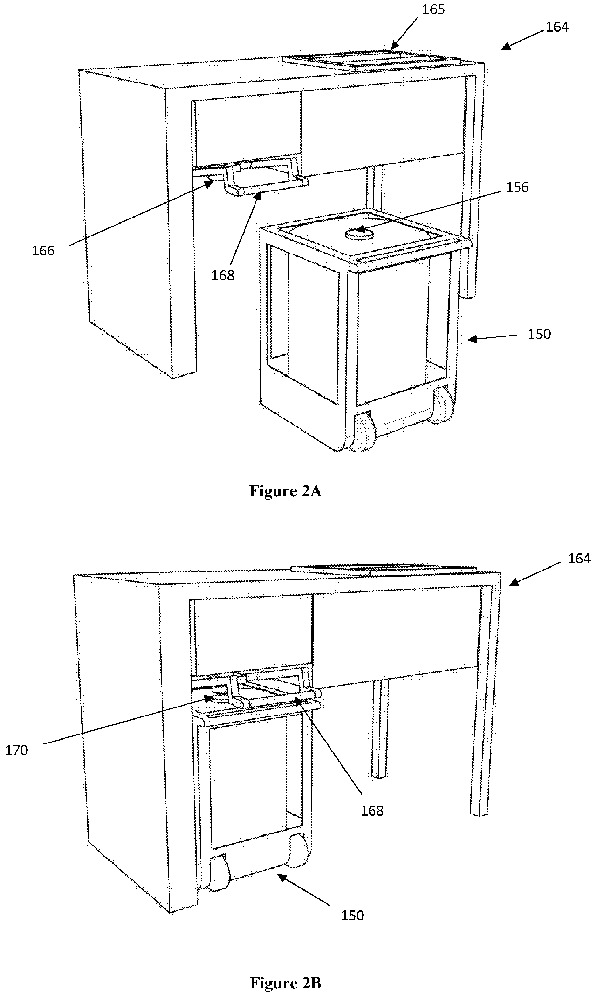

Referring now to Figures 2A to 2D, the bin 150 is shown being positioned underneath a workbench 164 having a receptacle 165 (covered by a grill, not numbered) through which food scraps can be emptied for transfer into the bin 150. The receptacle 165 is conveniently located on the uppermost surface of the workbench 164, and is shaped to receive and guide any food waste fed therein into workbench drain 166 via a shredder (or a macerator or grinder) and an in-line pump (not shown). In this manner, a flowable food waste is pumpable into the chamber 152 at a pressure sufficient to overcome the one way valve of inlet opening 156. Once pumped into the chamber 152, the one way valve of inlet opening 156 prevents the food waste from leaving the chamber 152 via inlet 156.

The drain 166 is operatively associated with a handle 168, which can be used to move the drain 166 between predefined positions (described below), and configured to couple with the inlet opening 156 of the bin 150 in a substantially airtight manner in order to define coupling 170.

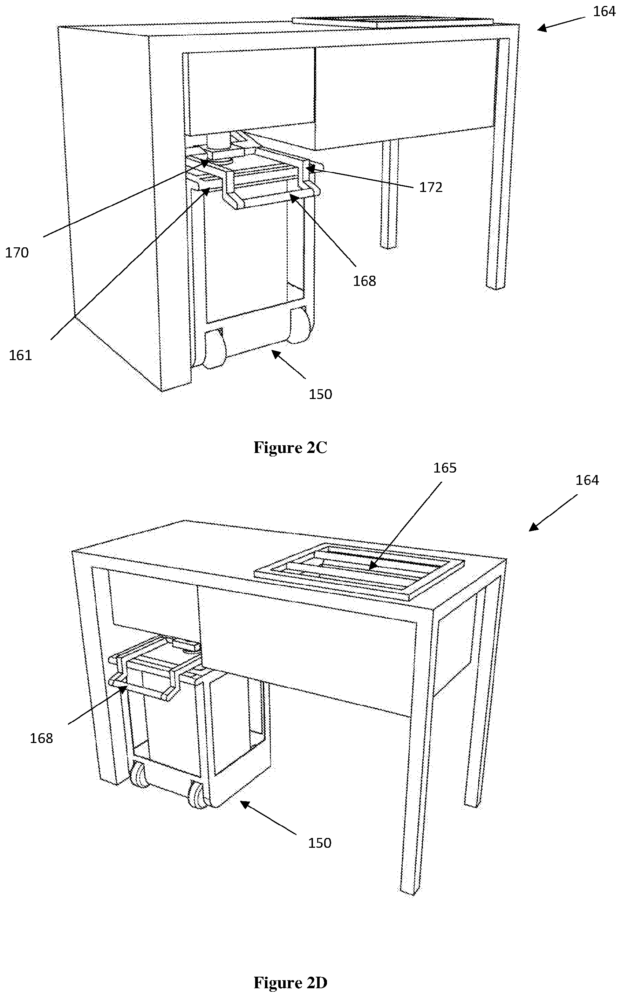

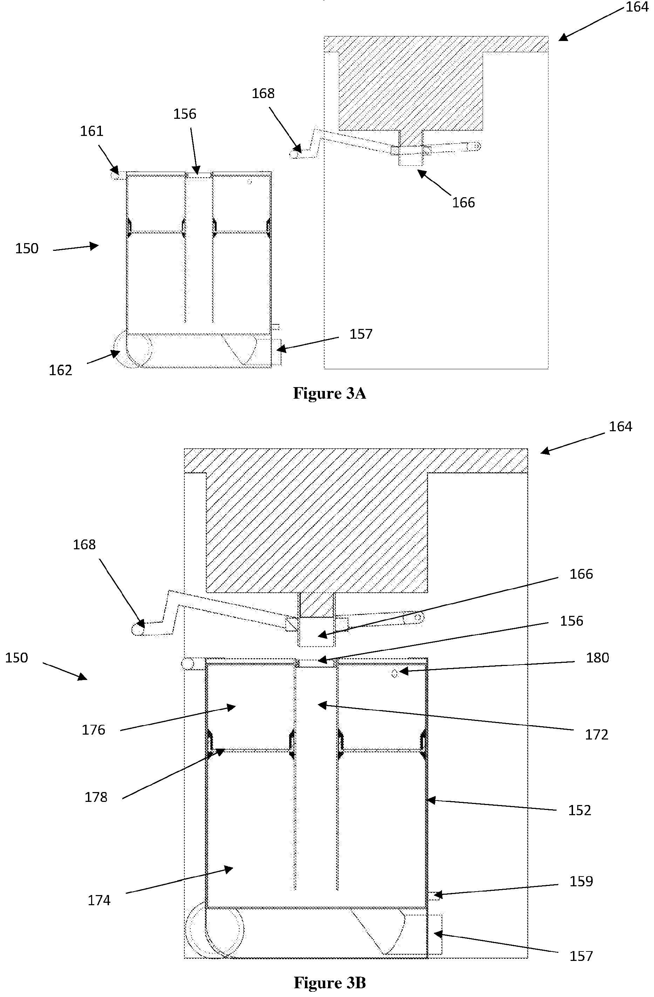

In operation, and as can be seen in Figure 2A, a bin 150 may be wheeled towards workbench 164 and aligned underneath handle 168 and drain 166. The bin 150 is then pushed underneath the workbench 164 in the manner shown in Figure 2B, with the inlet opening 156 being positioned underneath the drain 166. Actuation of handle 168 (compare Figures 2B and 2C) then moves drain 166 downwards and into a coupling relationship with inlet 156 in order to define substantially airtight coupling 170. As can be seen, handle 168 includes a return portion 172 that bears against handle 161 of the bin 150 and acts as a means for correctly positioning the bin 150 with respect to the workbench 164. Once in the position shown in Figures 2C and 2D, the bin 150 is ready to receive food waste, as will now be described with reference to Figures 3A to 3I.

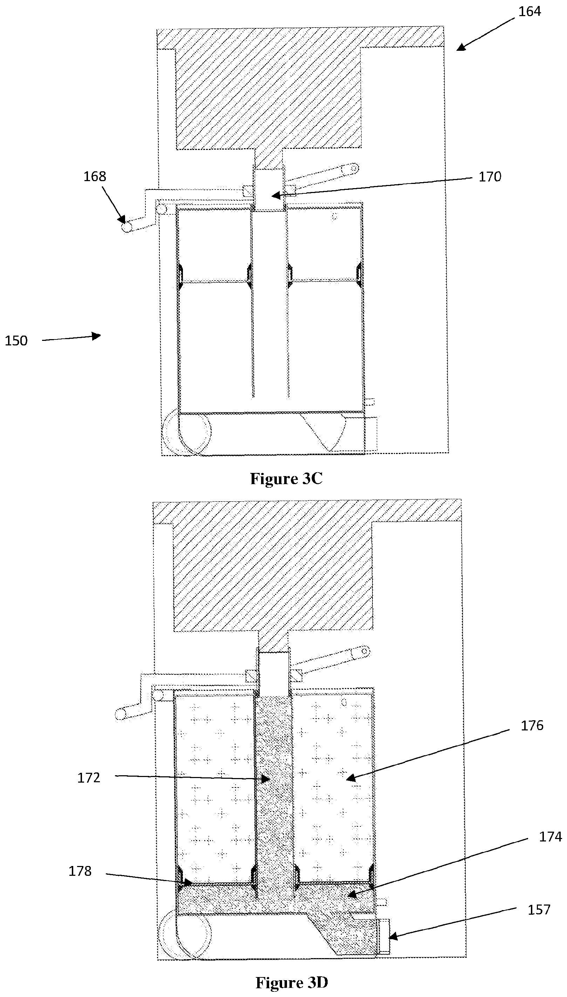

Figures 3A to 3I show cross sectional views of the bin 150 and workbench 164. For comparison purposes, Figures 3A, 3B and 3C show the bin 150 and workbench 164 in the same relative positions as Figures 2A, 2B and 2C, respectively. The interior of chamber 152 can be seen in Figures 3A to 3I, and includes (see Figure 3B) a centrally located channel 172 which leads from inlet 156 into a lower chamber 174 which extends around the periphery of the chamber 152. The chamber 152 also includes an upper chamber 176, which also extends around the periphery of the chamber 152 and is separated from the lower chamber 174 via slidable member 178. Slidable member 178 can slide up and down inside chamber 152 (thereby increasing/decreasing the relative volumes of the lower/upper chambers 174/176) and makes a sealing engagement (i.e. substantially impervious to the ingress of air or food waste, at the pressures experienced within the chamber 152) with the outer walls of the chamber 152 and the central channel 172. Any suitable seal may be used to provide this sealing engagement, with rubber/neoprene seals of the kind known in the art envisaged as being particularly applicable.

The upper chamber 176 is adapted to receive a volume of gas (typically air, although other gasses might be used instead to advantage) such that, in the substantial absence of any food waste in the lower chamber 174, the slidable member moves towards its lowermost position, towards the bottom of the central channel 172 (as shown in Figure 3D). If necessary, additional gas may be added to upper chamber 176 via valve 159, which leads through conduit 160 (not shown in Figure 3B) and into chamber 176 via valve 180. Additional gas may be added, for example, if deemed necessary at the time of emptying the bin 150 (as described below).

In use, food waste from the workbench 164 is shredded and pumped via coupling 170 into the central channel 172. Coupling 170 is substantially airtight and includes (as part of the inlet 156) a one way valve (not shown) such that food waste cannot exit via inlet 156 once fed into the chamber 152. In the configuration shown in Figure 3D, the chamber 152 of bin 150 is relatively empty, containing only a small amount of food waste in the central channel 172 (below the one way valve), lower chamber 174 and the conduit leading to outlet 157 (the non-return valve prevents the food waste from exiting via outlet 157 at the present time).

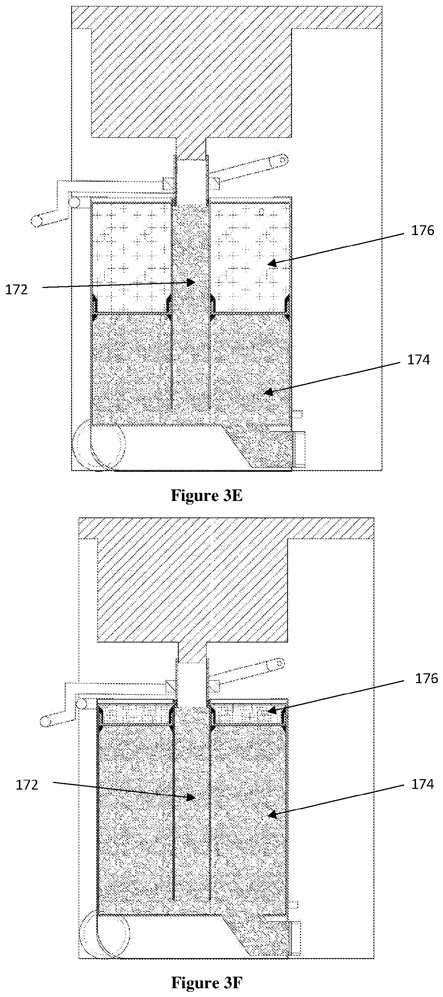

Referring now to Figures 3E and 3F, pumping of more food waste into the chamber 152 via central channel 172 causes the lower chamber 174 to expand and the upper chamber 176 to compress. As the hydraulic pressure caused by the substantially liquefied food waste in the lower chamber 174 is greater than the air pressure within the upper chamber 176, this can continue until the chamber 152 of bin 150 is substantially full (as is shown in Figure 3F). Obviously, any valves in the chamber 152 (e.g. those associated with the inlet 156, outlet 157 and rinsing inlet 158) will be capable of remaining sealed under such pressure.

In this manner, food waste within the lower chamber 174 of the chamber 152 is stored in the substantial absence of an atmosphere (and, in particular, the substantial absence of oxygen). Storage under such anoxic conditions may be beneficial because it would significantly reduce the rate of spoilage of the food waste, thereby preventing the formation of potentially unpleasant odours typically associated with food waste, but also maintaining the "freshness" of the food waste for the subsequent processing described herein. As would be appreciated, non-spoiled food waste should have a higher nutritional value than spoiled food waste, meaning that more nutritional products can be produced from food waste stored as described herein. Furthermore, food waste stored under anoxic conditions may be less susceptible to spoilage by bacterial growth and the associated toxins produced by bacteria.

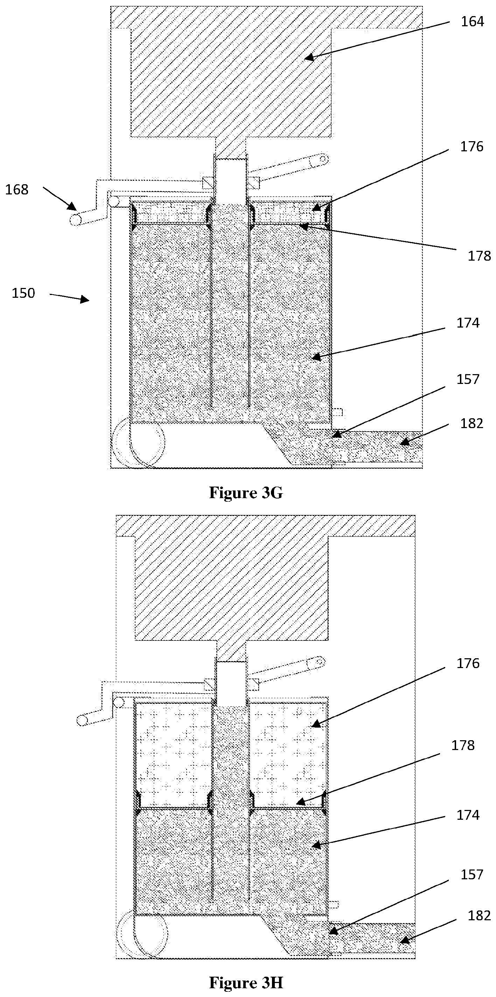

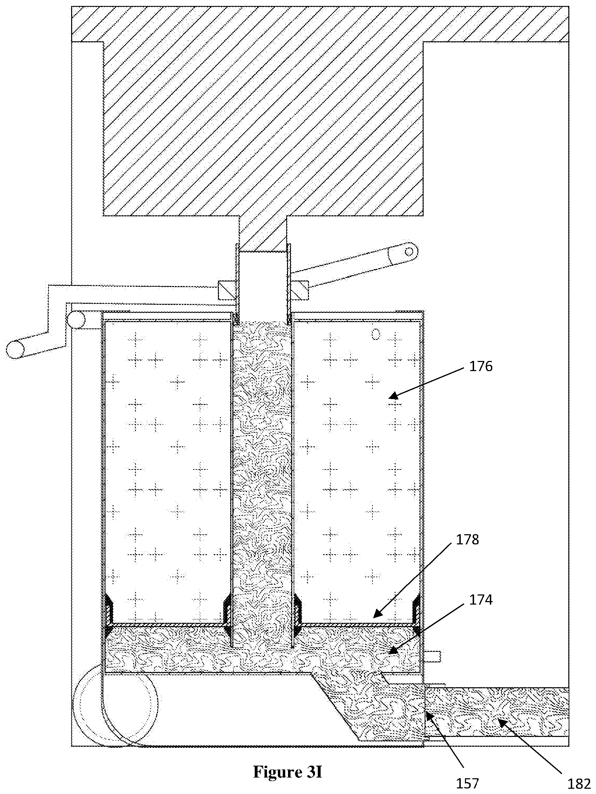

Once the bin 150 is full (i.e. Figure 3F), it is necessary to empty it, for example using one of the methods described herein (e.g. by wheeling the full bin 150 to a collection vehicle or, as described herein, by coupling it to a conduit via which the food waste is sucked out). Referring to Figures 3G, 3H and 3I, the outlet 157 has been coupled to waste outlet conduit 182 and the outlet 157 opened by applying a suction pressure greater than that of the non-return valve (not shown) of outlet 157. In the embodiment shown, the bin 150 remains in position under the workbench 164 during the emptying process, but it will be appreciated that the bin 150 could just as easily be decoupled by lifting handle 168 and wheeling it to a collection vehicle (as will be described below).

Once outlet 157 has been opened, the accumulated food waste in the lower chamber 174 is sucked out and the hydraulic pressure in the lower chamber 174 decreases. As this happens, the compressed air in the upper chamber 176 causes slidable member 178 to move downwards, thereby helping to force the food waste in the lower chamber 174 out of the outlet 157, but also cleaning the walls of the chamber 152 as it descends. Food waste pushed out from outlet 157 passes through waste outlet conduit 182 and into a food waste collector (not shown in Figure 3). If calibrated appropriately, the pressure within upper chamber 176 is sufficient to cause the slidable member 178 to move to its lowest point (i.e. as shown in Figure 3I), whereupon the chamber 152 is effectively emptied. A water wash may be performed at this time, which will be described in further detail below. As noted above, if necessary, additional air may be pumped into the upper chamber 176 via valve 180 if the pressure was not sufficient to achieve substantial emptying of the chamber 152.

Once the emptying cycle is complete, the suction applied to outlet 157 can be removed, whereupon the non-return valve of outlet 157 closes and the bin is again sealed and ready to receive shredded food waste.

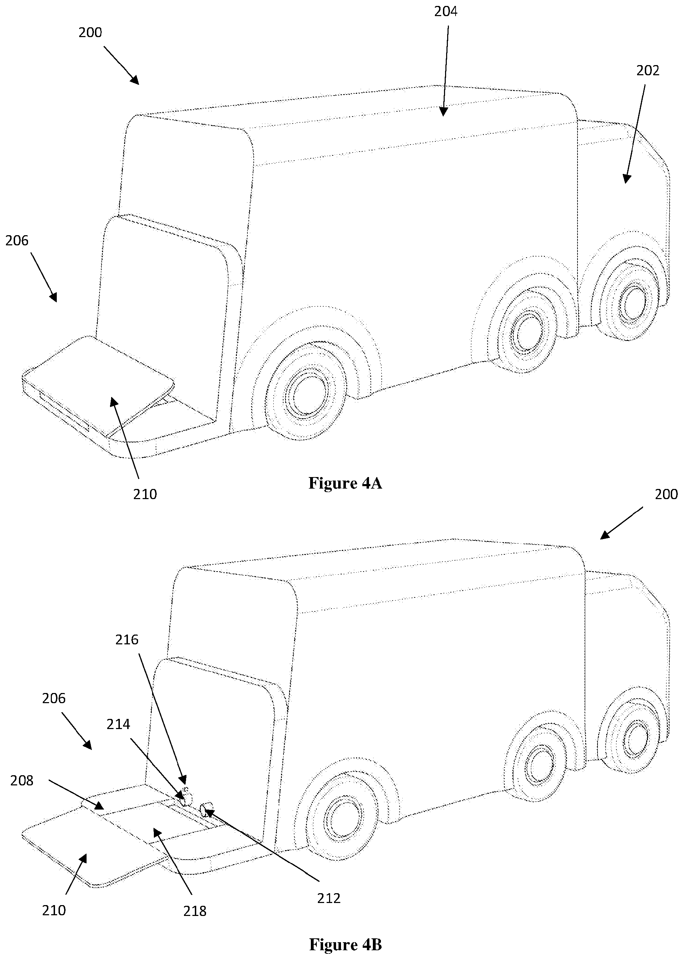

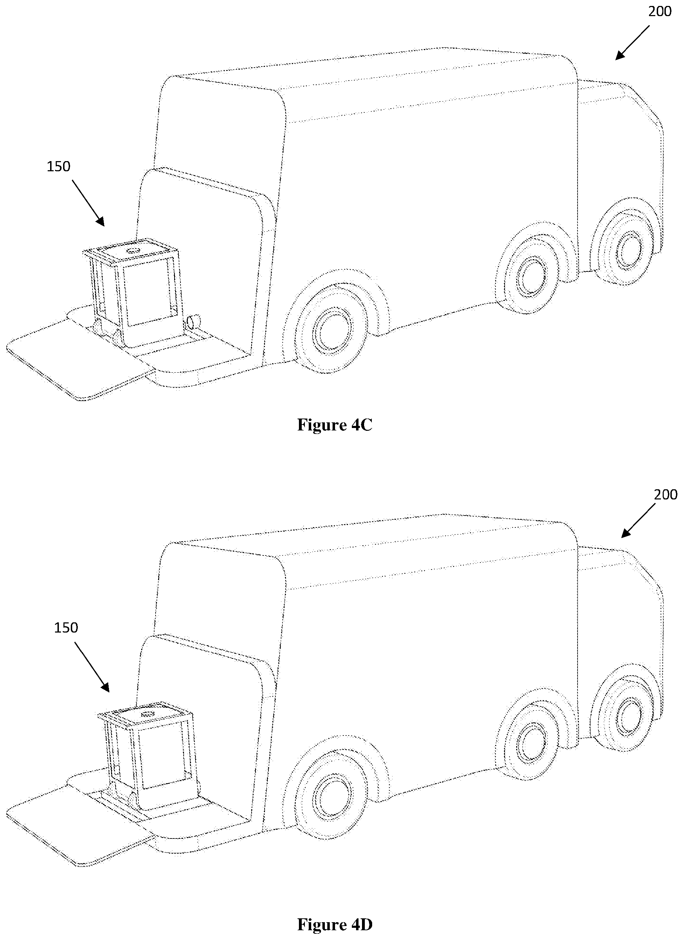

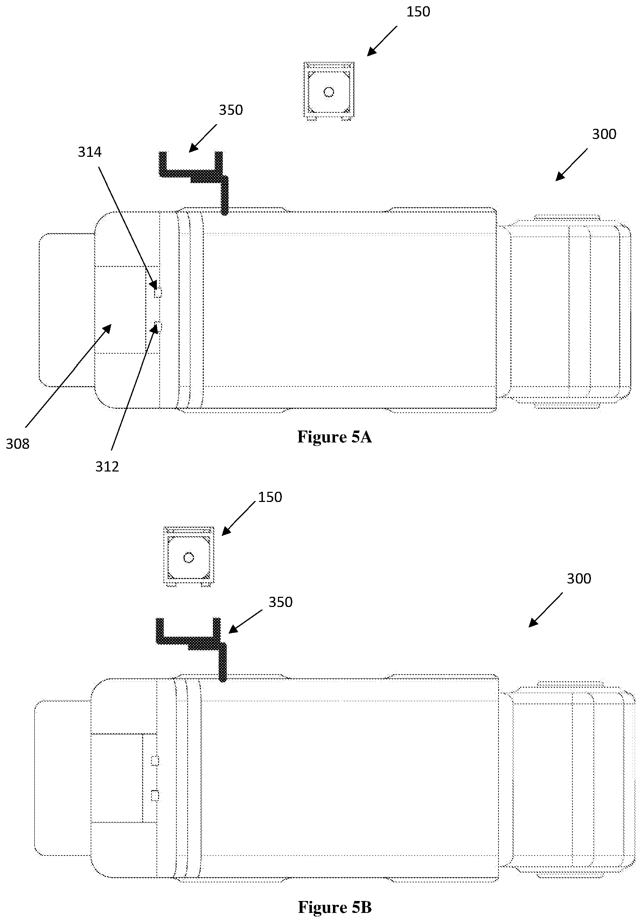

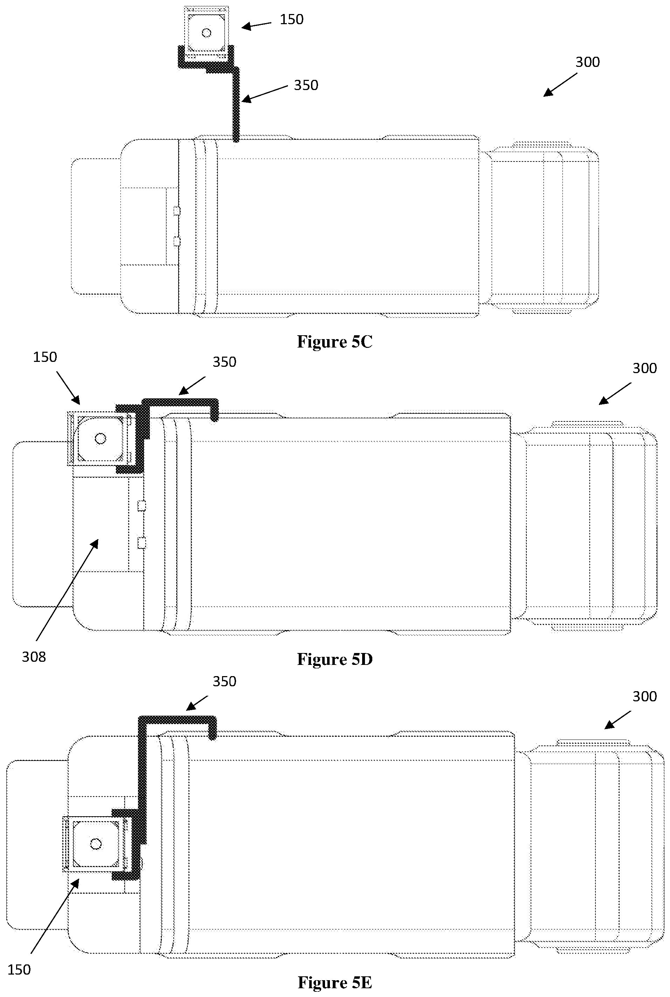

Figures 4 and 5 show different embodiments of food waste collectors for use with bin 150. Referring firstly to Figure 4A, a food waste collector in the form of truck 200 is shown. Truck 200 includes a cabin 202, from which the truck 200 can be driven, a storage portion 204, which contains food waste collected in the manner described below, a reservoir of a cleaning fluid (not shown) and a rearwardly projecting lip 206, on which there is a docking station 208 (see Figure 4B). Although not shown, the truck 200 will also include features that transport food waste emptied from bin 150 (i.e. as described below) from the dock 208 into the storage portion 204 (e.g. a conveyor belt or compacting member). The truck 200 will also include a mechanism via which the accumulated collected food waste can be emptied, for example by tipping the storage portion 204, or opening a door (not shown) on an underside of the storage portion 204.

The storage portion 204 may also be adapted to store the accumulated collected food waste in substantially anoxic conditions, for example, using a similar configuration to that described above with respect to chamber 152. Storing the food waste in such a manner will further delay the spoiling of the food, potentially resulting in a higher quality animal food, or the like, especially bearing in mind that the truck 200 may be on the road making collections all day and in a hot environment. Also advantageously, the use of a sliding member similar to slidable member 178 inside the truck would act to dampen movement of any liquid material contained therein, making the truck safer to drive.

The truck 200 also has a rearwardly projecting ramp 210, which is foldable between a stowed position located above the dock 208 (as shown in Figure 4A) and a deployed position (as shown in Figure 4B). Once deployed, the bin 150 can be wheeled up the ramp 210 and into the dock 208 (as shown in Figure 4C). Dock 208 has portals 212, 214 and 216, which are configured to couple to the outlet opening 157, rinsing inlet 158 and air pressure inlet 159, respectively, of a docked bin 150. Dock 208 also has a sliding floor 218 which, as can be seen by comparing Figures 4C and 4D, moves a bin 150 positioned thereon into and out from a docked position, where the portals 212, 214 and 216 are coupled to outlet opening 157, rinsing inlet 158 and air pressure inlet 159, respectively.

In use, a bin 150 containing food waste is wheeled out from an establishment, such as a restaurant, by an operator (e.g. the same person who drives the truck 200). The bin 150 is positioned behind the truck 200 and then pushed up the deployed ramp 210 and onto the floor 218 of the dock 208, as can be seen in Figure 4C. The floor 218 then slides the bin into the coupled relationship described above, with the food waste being sucked out from the outlet opening 157 until the bin 150 is substantially empty, followed by which a small volume of a rinsing solution is sprayed into the chamber 152 via rinsing inlet 158 (as will be described below). During this cycle, a pressure of the air within chamber 176 is measured and, if necessary, additional pressurised air is pumped into the chamber 176 via air pressure inlet 159.

Once the emptying and rinsing cycles have been completed, the process described above can be reversed, and the empty and (relatively) clean bin 150 returned to the establishment. The truck 200 would then be driven to the next establishment, or the bin 150 from a nearby establishment brought to the truck 200 for emptying and cleaning.

Referring now to Figure 5, a food waste collector in the form of truck 300 is shown. Tuck 300 is similar to truck 200, except for the manner in which bins 150 are docked thereat. In this regard, truck 300 has a side mounted lifter in the form of lifting arm 350 that is shaped such that it can be received around the side walls of the bin 150, and engage an upper lip of the bin upon lifting. Arm 350 is slidable into and away from the side of truck 300, and is pivotable and able to be elevated/lowered in the manner described below. Truck 300 is configured to automatically empty food waste from bins 150 in the manner described below.

The sequence via which a bin 150 is emptied is shown successively in Figures 5A to 5E. In Figure 5A, a bin 150 containing food waste has been wheeled out from an establishment, such as a restaurant, by an operator (e.g. the same person who drives the truck 300). Alternatively, the bin 150 may have been left out overnight by the restaurant owner. The bin 150 is positioned to the side of the truck 300, which drives up to the bin 150 with the arm 350 in its retracted position (see Figure 5A). Once the arm 350 is alongside the bin 150 (Figure 5B), the truck 300 comes to a halt and the arm 350 is extended and lowered (if necessary) into a position where the bin 150 can be grasped by the arm 350 (Figure 5C). The arm 350 can be actuated by the operator such that it lifts up and pivots the bin 150 (see Figure 5D) until such time as the bin 150 is located in a suspended position behind the truck 300. The bin 150 can then be slid until it is directly above the dock 308, as can be seen in Figure 5E. Once the bin 150 is in this position, it can be docked in any suitable manner to establish its working connection with portals 312, 314, for example as described above with reference to truck 200.

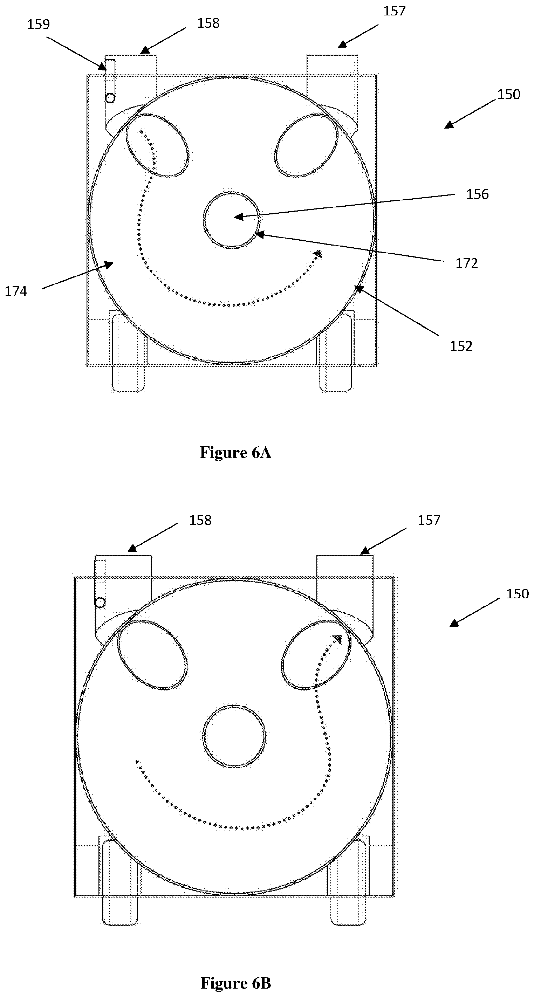

As described above, in many embodiments, the bin 150 would be cleaned immediately after emptying. In such embodiments, and as shown in Figure 6A for example, once docked on the truck 200 or 300, a jet of a cleaning fluid (typically water, although weakly acidic or caustic cleaning fluids might be used in some applications) can be sprayed by portal 214/314 into the lower chamber 174 of chamber 152 via a rinsing inlet 158, whereupon any food waste clinging to the side walls of the lower chamber 174 would tend to be washed off and into the portal 212/312 via outlet 157 (as shown in Figure 6B). As the sliding member 178 is in its lowermost position (see Figure 3I) at this time, the volume of the lower chamber 174 is relatively small, and hence only a small volume of cleaning fluid needs to be used. As noted above, the action of the sliding member 178 during emptying of the bin 150 also cleans the inner walls of the chamber 152, which results in a relatively clean bin 150 every cycle.

Referring now to Figures 7A, 7B and 7C, shown in the form of food waste receptacle 400 is a receptacle for receiving and storing food waste and a tamper resistant lid assembly. Receptacle 400 has a body 402 and a lid assembly 404, which overlies the opening at the uppermost end of the receptacle's body 402 (see Figure 7C). Lid assembly 404 includes an upper lid 406 and a lower lid 408, which extends like a skirt around the periphery of upper lid 406. Lower lid 408 is shaped such that its underside closely conforms to the upper side of a rim 410 of the receptacle body 402, thereby providing an effective seal between the peripheries of the lower lid 408 and the rim/body 410/402.

Upper lid 406 is lockable in its closed position (i.e. as shown in Figure 7A) via a lock 412, with a key (not shown) being provided with the receptacle 400 in order for the user to be able to unlock the lid 406 in order to access the receptacle 400 and then lock the lid 406 in its closed position in order to prevent unauthorised access (e.g. when the receptacle 400 has been placed on the street for collection).

As can be seen by comparing Figures 7A and 7B, upper lid 406 is pivotable about an edge thereof with respect to the lower lid 408 via upper lid pivot 414 in order to open and close the lid 406. The mountings for pivot 414 are located on the lower lid 408 and may take any form that enables such a pivoting movement. Pivot 414 may, in some forms (not shown), also include a biasing member which biases the lid 406 into its closed position (e.g. so as to maintain lid 406 in a normally closed configuration in order to reduce the smell that emanates from the receptacle 400).

Projecting downwardly from the rim 410 are two locking tabs 416 (only one of which can be seen in the Figures). Each locking tab 416 is pivotally connected to the body 402 (underneath the rim 410) and has a latch 418 (see Figure 7C) at its distal end. Latch 418 engages with a lug in a corresponding recess 419 provided on an underside of the lower lid 408 in order to lock the lower lid 408 in its closed position (i.e. that shown in Figures 7A and 7B). Depressing the tabs 416, 416 towards the body 402 (in the manner described below, for example) causes the latches 418, 418 to move into non-engaging positions in recesses 419, 419, which places the lid 408 into an unlocked configuration.

Lower lid 408 is pivotally connected to the body 402 via lower lid pivot 420. As can be seen by comparing Figures 7A and 7C, the lower lid 408 is operable independently of the upper lid 406 and, when opened, exposes the entire opening of the receptacle's body 402. Pivot 420 includes a torsional spring (not shown) inside it, which acts to bias the lid 408 into its closed position (i.e. that shown in Figures 7A and 7B). The strength of this biasing will depend on the receptacle's 400 application, but it should be at least strong enough to prevent a casual passer-by from being able to prize open the lower lid 408 (whilst also depressing both tabs 416, 416) so that they can place potentially contaminating rubbish into the receptacle.

The opposing ends of lower lid pivot 420 include sockets 422, 422 which, in this embodiment, are square-shaped male members configured for receipt in complementary female members (as will be described below). Rotation of the sockets 422, 422 (as will be described below) whilst simultaneously depressing tabs 416, 416 causes the lid 408 to open (i.e. as shown in Figure 7C) and thereby expose the contents of the receptacle's body 402. Typically, the lower lid 408 and body 402 will be configured such that the lower lid can be rotated about the pivot 420 by close to 270°, in order for the lid assembly 404 to be rotatable completely out of the way of any material to be emptied. As would be appreciated, any food waste that became caught up on the lid assembly 404 during emptying might be returned to the receptacle 402 when the lid 408 was closed, potentially contaminating the next batch of food waste.

Although not shown, the receptacle 400 would typically include a feature or features that enable at least the likely contents of the bin to be identified (e.g. for categorising the food waste, as described herein). Such a feature may be a physical feature as simple as a coloured lid assembly, but might also be provided in an electronic form. For example, the receptacle 400 may include a RFID-detectable tag that is readable by a detector carried by a collection vehicle. Information such as the identity of the receptacle's owner, their category of food waste and the last time that the receptacle 400 was collected may be stored in a memory of a computer system and accessible by the collector in order to appropriately process the collection of the receptacle 400.

Referring now to Figures 8A to 8E, shown is a method via which the receptacle 400 may be automatically collected and emptied. Referring firstly to Figure 8A, the receptacle 400 is positioned in an accessible place (e.g. by the roadside) for collection by a collection vehicle (not shown in Figure 8). A lifting arm 450 having two forks is extendable from the collection vehicle towards the receptacle in the manner shown in Figures 8A and 8B, with an upper side of the arm 450 abutting an underside of the rim 410 so that upward movement of the arm 450 lifts the receptacle 400 (as will be described below). The arm 450 is configured to depress the locking tabs 416, 416 when in this position, thus placing the lower lid 408 into an unlocked state.

The distal ends of each of forks of the arm 450 include a rotatable coupling 452 which, as can be seen in Figure 8B, is positioned adjacent to each socket 422 when the receptacle 400 is in an appropriate position with respect to the arm 450. Each rotatable coupling 452 includes a sheath 454, which is configured to matingly receive the socket 422 therein, and an extendable sleeve 456 (see Figure 8C). As can be seen by comparing Figures 8B and 8C, extension of the extendable sleeves 456, 456 causes sheathes 454, 454 to mate with the corresponding sockets 422, 422. In this manner, rotation of the couplings 452, 452 causes the lid 408 to open, as can be seen in Figures 8D and 8E.

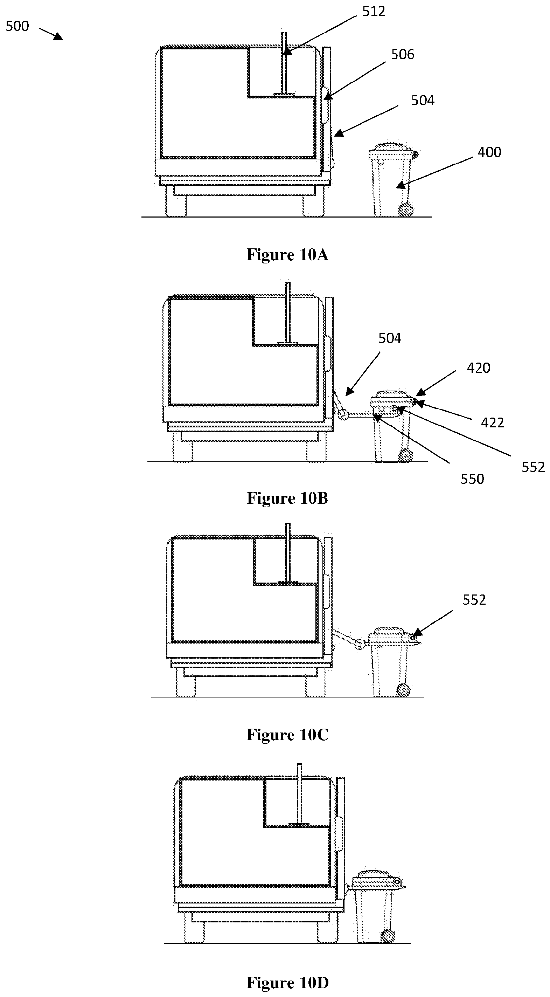

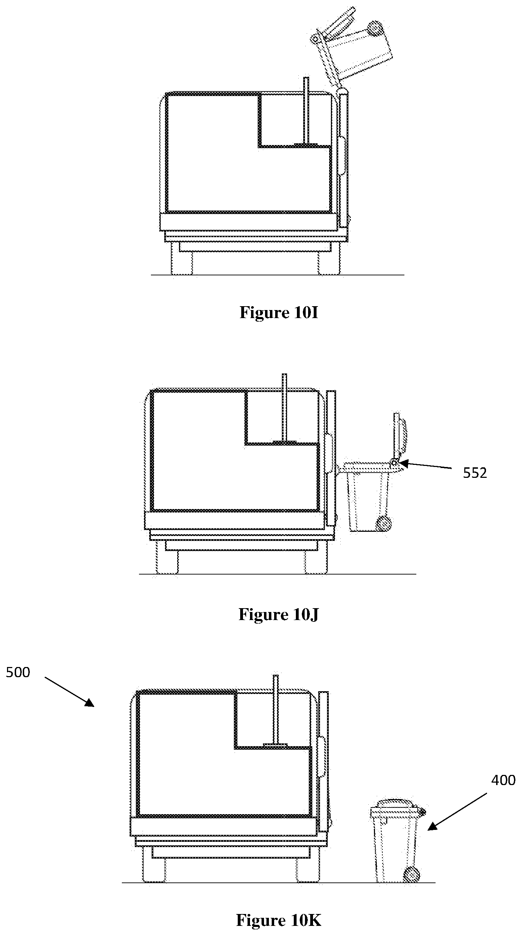

Referring now to Figures 9A to 9E and 10A to 10K, shown is a food waste collector in the form of truck 500 for collecting food waste from food waste receptacles shown, in this embodiment, in the form of receptacles 400, as described above. It is to be appreciated, of course, that truck 500 could be used to collect receptacles other than receptacles 400, provided that such receptacles were configured in a compatible manner.

Truck 500 carries a food waste receptacle 502 and includes a lifting arm 504 which is configured to extend arm 550 outwardly from the side of the truck 500 in order to collect, lift and move receptacle 400 in the manner described herein. Lifting arm 504 is mounted on sliding rails 506, 506, which extend along the side of the food waste receptacle 502 of truck 500 in order for the arm 504 to be able to move the receptacle 400 between a plurality of chambers, shown generally in the form of hoppers 508. As can be seen from Figures 9C and 9D, the arm 504 is operable to lift the receptacle 400 off the ground to a height above that of the truck 500, slide the receptacle along the rails 506 until it is in alignment with the appropriate hopper 508, and then pivot the receptacle so that it is turned upside down above the hopper. In this position, the vast majority of food waste contained in the receptacle 400 would be emptied into the respective hopper 508. The upside down receptacle 400 can then be slid to a position above a washing compartment 511 (Figure 9D), as will be described below.

The food waste receptacle 502 of truck 500 includes, in this embodiment, seven hoppers, labelled as 508A, 508B, 508C, 508D, 508E, 508F and 508G (not all of which are labelled for clarity) extending from the rear to the front of the truck 500. Each hopper 508 is intended to receive a respective category of food waste. For example, hopper 508A may be for food waste from a baker, hopper 508B for waste from a café, hopper 508C for waste from a butcher, etc. In this manner, different categories of food wastes, which the inventor has found can be processed to form animal feed precursors having reliable and relatively consistent properties (e.g. moisture content, yields, protein and fat contents, etc.), can be collected using the one truck 500, but maintained separately for their subsequent processing. Furthermore, certain categories of food wastes may be processed slightly differently, for example, fruit and vegetables or bakery waste is unlikely to carry the same type and amount of pathogens as would food waste from a butcher, for example. Process efficiencies may therefore be achievable by storing and processing the separate categories of food waste separately. In contrast, animal feed produced from mixed categories of food wastes, whilst still being a vendible product, can have highly variable properties (particularly its protein content), and may require the addition of nutritional supplements in order for its nutritional content to meet threshold requirements. Further, mixed food waste would typically need to be treated to destroy the level of pathogens that may be present in the worst possible type of food waste, which may not be appropriate (or even necessary) for all categories of food waste.

Each food waste hopper 508 has a lid 509, which is slidable in order to provide an opening into which food waste contained within receptacle 400 can be emptied into the hopper (as will be described below). Referring to Figure 9B, for example, the lid 509C of hopper 508C is shown in an open configuration, whilst the lids 509B and 509D (not labelled) of adjacent hoppers 508B and 508D are shown in closed configurations. Similarly, each food waste hopper 508 has a gate 510, which is openable (e.g. by sliding upwardly using any suitable mechanism) in order to provide an opening from which food waste contained within the respective hopper 308 can be emptied from the hopper (as will be described below). Referring to Figure 9A, for example, the gate 510B of hopper 508B is shown.

In some forms, one of the hoppers (e.g. hopper 508A or 508G, which are the endmost hoppers) may be designated as a general waste hopper. Such a general waste hopper may be useful in the event of it being detected that the receptacle 400 has been tampered with, or that an unacceptable amount of time has passed since the receptacle was last collected (and hence it is likely to contain spoiled food waste). In such an event, the receptacle 400 still needs to be emptied for return to its user, but the food waste contained therein may be detrimental to its subsequent processing. The contents of the receptacle 400 may thus be emptied into the general waste hopper, where it is maintained separately from the "higher value" food wastes. In keeping with the overarching theme of the present disclosure, such waste may, for example and if appropriate, be used to produce less beneficial products such as liquid fertilisers.

As can be seen in Figures 9B and 9E, truck 500 also includes a washing compartment 511 for rinsing the receptacle 400 before it is returned to its original location. As would be appreciated, some kinds of food waste tend to be relatively wet and may adhere to the side walls of the receptacle 400, even if the receptacle is shaken during emptying. However, the presence of residual food waste in the receptacle 400 should be avoided as it will probably have started to spoil and its presence in the receptacle may contaminate fresh food waste added to the receptacle. Washing compartment 511 includes a spigot 512, which projects upwardly and over which the upturned receptacle 400 may be positioned by arm 504 (as shown in Figure 9E). Spigot 512 is located within a washing chamber 514 into which water sprayed into the receptacle 400 will fall, along with any food waste remaining inside the receptacle. This dirty water/food waste then flows, via drain 515, into the waste water container 516 where it is stored until emptied. Although not shown, container 516 may include a number of baffles (or the like) in order to prevent significant water movement when the truck 500 is being driven. Fresh water for spraying into the receptacle 400 is obtained from rinsing water container 518, with the fresh water being pumped to the spigot 512 using a submersible pump 520.

In use, an emptied receptacle 400 is slid into a position over the spigot 512 and then lowered onto it. A volume of water pumped from container 518 is then sprayed into the interior of the receptacle 400, which should dislodge any food waste adhering to the inner walls, as well as generally clean out the receptacle. The dirty water/food waste then flows into the washing chamber 514 and, via drain 515, into the waste water container 516. The contents of waste water container 516 would typically be beneficially used in the process described herein.

As can be seen, the washing compartment may also be adapted to carry replacement receptacles 430, in the event of a particular receptacle 400 being found to be damaged, for example.

The collection and emptying of receptacle 400 by truck 500 will now be described with reference to Figures 10A to 10K. The truck 500 would first position itself next to a receptacle 400 awaiting collection, as can be seen in Figure 10A. The lifting arm 504 and its distal arm 550 (which are stowed when the truck is moving for safety reasons) would then be deployed (as shown in Figures 10B and 10C) such that they engage with the receptacle 400 in the manner described above with respect to Figure 8 (and, in particular, with the rotatable couplings 552 engaging the respective sockets 422).

At around this time, a determination is made about the category of food waste contained within receptacle 400, for example using RFID. An RFID tag in the receptacle 400 can provide information about the category of food waste contained within receptacle, the last time the receptacle was collected and other relevant information. Assuming that the receptacle 400 was collected recently (typically the day previously), then the category of food waste will be noted for emptying into the appropriate hopper 508. If the receptacle 400 was not recently emptied (e.g. because a café owner forgot to do so the day previously), then the food waste may be categorised an unusable (especially for food waste which rapidly spoils, such as meat or vegetables) and destined for a hopper 508 dedicated for the collection of such waste. In such circumstances, as it may be necessary to incur costs in disposing of this waste, a fine or an additional collection levy may be levied on the user of the receptacle 400.

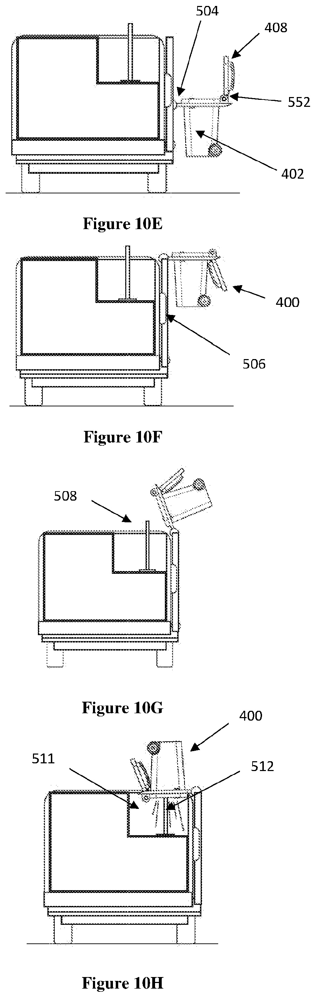

The receptacle 400 is then pulled towards the truck 500 (Figure 10D) and lifted by the lifting arm 504, whist the rotatable couplings 452 simultaneously rotate and thus, via their engagement with the sockets 422, cause the second lid 408 of the bin to open fully (Figures 10E and 10F). Once the receptacle 400 is lifted to a height about equal to that of the truck 500, it is slid along rails 506 until it is in alignment with the appropriate hopper 508 (Figure 10F), the lid 509 of which will have opened. The arm 550 then pivots about the lifting arm 504 (Figure 10G) in order to tip the receptacle 400 upside down above the hopper 508, such that the food waste contained therein falls into the hopper. Finally, the upside down receptacle is slid into a position above the spigot 512, lowered into the washing compartment 511 (Figure 10H) and rinsed out, in the manner described above.

The rinsed and relatively clean receptacle 400 is then lifted off the spigot 512, turned the right way around again (Figure 10I) and lowered (Figure 10J) back down to the ground. During this operation, the rotatable couplings 552 rotate and, via their engagement with the sockets 422, cause the second lid 408 to close again. The lifting arm 504 then extends and the receptacle 400 is placed back into its original position. Moving the arm 505 away from the receptacle 400 and back towards the truck 500 (where it is retracted by being folded up towards the truck) releases the tabs 416, 416, whereupon the lid 408 is again locked such that passers-by cannot open the receptacle 400. The emptied and rinsed receptacle 400 can then be collected (e.g. when the café opens) for emptying that day's waste into.

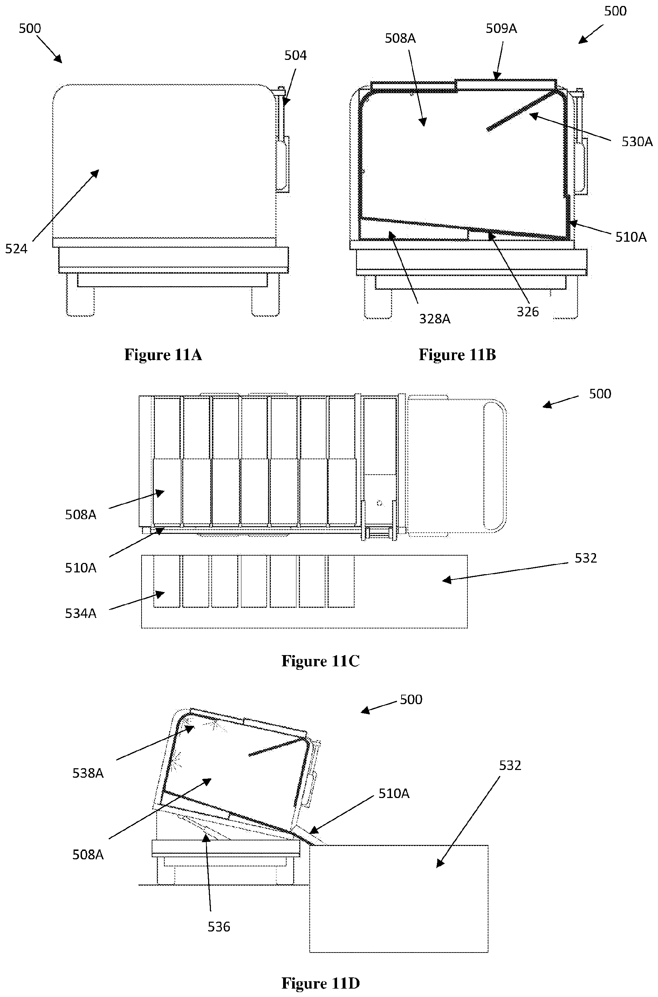

Referring now to Figures 11A and 11B, the interior structure of the hoppers 508 is shown. Figure 11A shows a rear view of the truck 500, with its rear wall 524 prominent. Figure 11B shows a cross-sectional view taken through the outermost hopper 508A, with its slidable lid 509A (in its closed position) and side gate 510A clearly visible. Hopper 508A also has a sloped floor 526, which acts to guide food waste contained therein (not shown) towards the gate 510A in order to facilitate emptying of the hopper (as will be described below). A water container 528A is provided underneath the elevated portion of the sloped floor 526, which contains water for rinsing out the hopper (as will be described below). In some embodiments, the waste container 528 may be provided as a single container which supplies rinsing water for all hoppers 508, provided there is no possibility of any cross-contamination occurring. Hopper 508A also includes a waste guide 530A, which helps to more evenly distribute food waste dropped into the hopper. The other hoppers 508 may (but need not) have a structure the same as that of hopper 508A.

The procedure for emptying the food waste contained within the hoppers 508 of the truck 500 will now be described with reference to Figures 11C and 11D. The driver of the truck 500 would firstly align the truck with a waste materials receiver 532, which may be located on, or slightly above, the ground. The waste materials receiver 532 includes seven portals 534A, 534B, 534C, 534D, 534E, 534F and 534G, which are configured to receive food waste emptied form the gates 510A, 510B, 510C, 510D, 510E, 510F and 510G, respectively. Portals 534 lead (not shown) to separate storage locations for subsequent processing (e.g. to produce animal feed or feedstocks for animal feed).

The truck 500 may include a hydraulic ram 536, which is operable to tilt the food waste receptacle 502 in the manner shown in Figure 11D in order to facilitate emptying of the hoppers 508. A number of water sprays 538 are also provided on an upper side of the hoppers 508 (the water sprays 538A for hopper 508A are shown in Figure 11D), with water from the container(s) 528 being used to rinse out the hoppers 508 and hence remove the vast majority of the food waste originally contained therein. Although not shown, waste water held in waste water container 516 may also be emptied at this time.

Once emptied (and further cleaned, should this be necessary), the various water reservoirs in truck 500 may be refilled as necessary and the truck is then ready for its next collection run.

It will be appreciated that the present invention provides a number of new and useful results. For example, specific embodiments of the present invention may provide one or more of the following advantages:
- less food waste is sent to landfill;
- a vendible, high quality animal feed can be produced, at a relatively low ongoing cost (i.e. due to the relatively inexpensive supply of food waste ingredients) and potentially form only collected food waste;
- anoxic storage of food waste, with the attendant benefits described herein;
- a simplified process via which food waste producers can recycle their food waste;
- a reduced cost to food waste producers for their food waste disposal;
- larger scale operations are more likely to be commercially viable that ad hoc traditional small-scale operations; and
- larger scale operations would produce food wastes having relatively consistent properties, meaning that downstream processes can be more tailored.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A process for producing animal feed from food waste, the process comprising:
producing a feedstock for the animal feed, the process comprising:
providing a categorised food waste collected from producers of the categorised food waste;
treating the categorised food waste to destroy substantially all pathogens;
grinding the categorised food waste; and
forming the treated and ground food waste into the feedstock, wherein the feedstock is dried, and
determining an amount of the feedstock which, when combined with an amount of a feedstock produced from a different categorised food waste, would produce an animal feed having a specific nutritional profile, and
blending the feedstocks to produce the animal feed having the specific nutritional profile.

2. The process of claim 1, wherein the feedstock is formed in powder form.

3. The process of claim 1 or claim 2, wherein the food waste is heated to destroy substantially all pathogens.

4. The process of any one of claims 1 to 3, wherein the blended feedstocks are formed into an animal feed by extrusion.

5. The process of claim any one of claims 1 to 4, wherein any liquid produced during the process is collected for producing a liquid fertiliser.

6. The process as claimed in any one of claims 1 to 5, wherein the provided categorised food waste is categorised by a source of the food waste.

7. The process of claim 6, wherein the sources of the food waste include two or more sources selected from: bakers, cafes, restaurants, supermarkets, grocers, delicatessens and butchers.

## Patentansprüche

1. Verfahren zur Herstellung von Tierfutter aus Lebensmittelabfällen, wobei das Verfahren Folgendes umfasst:
Herstellen eines Ausgangsmaterials für das Tierfutter, wobei das Verfahren Folgendes umfasst:
Bereitstellen von sortierten Lebensmittelabfällen, die bei den Erzeugern dieser sortierten Lebensmittelabfälle gesammelt wurden;
Behandeln der sortierten Lebensmittelabfälle, um im Wesentlichen alle Krankheitserreger zu vernichten;
Zerkleinern der sortierten Lebensmittelabfälle; und
Bilden der behandelten und zerkleinerten Lebensmittelabfälle zu dem Ausgangsmaterial, wobei das Ausgangsmaterial getrocknet wird, und
Bestimmen einer Menge des Ausgangsmaterials, die bei Kombination mit einer Menge eines aus anderen sortierten Lebensmittelabfällen hergestellten Ausgangsmaterials ein Tierfutter mit einem spezifischen Nährstoffprofil ergeben würde, und
Mischen der Ausgangsmaterialien, um das Tierfutter mit dem spezifischen Nährstoffprofil herzustellen.

2. Verfahren nach Anspruch 1, wobei das Ausgangsmaterial in Pulverform gebildet wird.

3. Verfahren nach Anspruch 1 oder Anspruch 2, wobei die Lebensmittelabfälle erhitzt werden, um im Wesentlichen alle Krankheitserreger zu vernichten.

4. Verfahren nach einem der Ansprüche 1 bis 3, wobei die gemischten Ausgangsstoffe durch Extrusion zu einem Tierfutter gebildet werden.

5. Verfahren nach einem der Ansprüche 1 bis 4, wobei jede während des Verfahrens hergestellte Flüssigkeit für die Herstellung eines Flüssigdüngers gesammelt wird.

6. Verfahren nach einem der Ansprüche 1 bis 5, wobei die bereitgestellten sortierten Lebensmittelabfälle nach einer Herkunft der Lebensmittelabfälle sortiert werden.

7. Verfahren nach Anspruch 6, wobei die Herkunft der Lebensmittelabfälle zwei oder mehr Quellen einschließen, die ausgewählt sind aus: Bäckereien, Cafés, Restaurants, Supermärkten, Lebensmittelgeschäften, Feinkostgeschäften und Metzgereien.

## Revendications

1. Procédé de production d'aliment pour animaux à partir de déchets alimentaires comprenant :
la production d'une matière première pour l'aliment pour animaux, le procédé comprenant :
la fourniture de déchets alimentaires catégorisés recueillis auprès des producteurs de déchets alimentaires catégorisés ;
le traitement des déchets alimentaires catégorisés pour détruire sensiblement tous les agents pathogènes ;
le broyage des déchets alimentaires catégorisés ; et
la transformation des déchets alimentaires traités et broyés en matière première, dans lequel la matière première est séchée, et
la détermination d'une quantité de matière première qui, lorsqu'elle est combinée à une quantité de matière première produite à partir de déchets alimentaires d'une autre catégorie, produirait un aliment pour animaux présentant un profil nutritionnel spécifique, et
le mélange des matières premières pour produire l'aliment pour animaux présentant un profil nutritionnel spécifique.

2. Procédé de la revendication 1, dans lequel la matière première se présente sous forme de poudre.

3. Procédé selon la revendication 1 ou la revendication 2, dans lequel les déchets alimentaires sont chauffés pour détruire sensiblement tous les agents pathogènes.

4. Procédé selon l'une quelconque des revendications 1 à 3, dans lequel les matières premières mélangées sont transformées en aliment pour animaux par extrusion.

5. Procédé selon l'une quelconque des revendications 1 à 4, dans lequel tout liquide produit au cours du procédé est recueilli pour produire un engrais liquide.

6. Procédé selon l'une quelconque des revendications 1 à 5, dans lequel les déchets alimentaires catégorisés fournis sont catégorisés en fonction d'une source des déchets alimentaires.

7. Procédé selon la revendication 6, dans lequel les sources de déchets alimentaires comprennent deux ou plusieurs sources choisies parmi : les boulangeries, les cafés, les restaurants, les supermarchés, les épiceries, les charcuteries et les boucheries.
